(19) **Europäisches Patentamt / European Patent Office / Office européen des brevets**

(11) **EP 3 660 484 B1**

(12) **FASCICULE DE BREVET EUROPEEN**

(45) Date de publication et mention de la délivrance du brevet:
**07.08.2024 Bulletin 2024/32**

(51) Classification Internationale des Brevets (IPC):
**G01N 3/08** (2006.01)    **G01N 3/32** (2006.01)
**G01M 5/00** (2006.01)

(21) Numéro de dépôt: **19212734.8**

(22) Date de dépôt: **29.11.2019**

(52) Classification Coopérative des Brevets (CPC):
**G01N 3/32; G01M 5/0025; G01M 5/0033;**
G01N 2203/0062; G01N 2203/0066;
G01N 2203/0208; G01N 2203/0218

(54) **SYSTÈME ET PROCÉDÉ DE DÉTERMINATION DE CARACTÉRISTIQUES D'UNE FISSURE**

SYSTEM UND VERFAHREN ZUR BESTIMMUNG DER EIGENSCHAFTEN EINES RISSES

SYSTEM AND METHOD FOR DETERMINING CHARACTERISTICS OF A CRACK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2018 FR 1872185**

(43) Date de publication de la demande:
**03.06.2020 Bulletin 2020/23**

(73) Titulaire: **Electricité de France**
**75008 Paris (FR)**

(72) Inventeurs:
• **KAZYMYRENKO, Kyrylo**
 **91120 PALAISEAU (FR)**
• **HABOUSSA, David**
 **91300 MASSY (FR)**

(74) Mandataire: **Plasseraud IP**
 **66, rue de la Chaussée d'Antin**
 **75440 Paris Cedex 09 (FR)**

(56) Documents cités:
**JP-A- 2002 349 178    JP-A- 2005 338 056**
**JP-A- S63 229 339**

**Description**

Le domaine de l'invention se rapporte à la fissuration des matériaux et plus spécifiquement aux systèmes et procédés de détermination de caractéristiques d'une fissure détectée dans un matériau, notamment la direction ainsi que la position de la ou des pointes de la fissure.

Aujourd'hui, l'identification d'une fissure dans un matériau constitue un enjeu majeur dans l'industrie. La propagation d'une fissure dans une structure industrielle peut en effet conduire à un dysfonctionnement de celle-ci. Par exemple, la propagation de fissures dans une installation de tuyauterie peut avoir pour conséquence des fuites indésirables présentant un danger potentiel.

Lorsqu'on dispose des caractéristiques de la fissure, notamment la direction ainsi que la position de la ou des pointes de la fissure, on utilise généralement le formalisme connu de la mécanique élastique linéaire de la rupture (connue sous l'acronyme MELR) pour prévoir la propagation de la fissure et la probabilité de cette propagation. Cette analyse prédictive permet ainsi d'évaluer la nocivité d'une fissure et de mettre en oeuvre les moyens nécessaires pour empêcher la fissure détectée de se propager dans le matériau menacé. Outre la possibilité de réduire les chargements mécaniques appliqués, il est notamment connu d'appliquer au matériau fissuré des chargements mécaniques permettant d'entraver la propagation de la fissure.

Les principes de la mécanique élastique linéaire de la rupture sont particulièrement adaptés aux matériaux dits fragiles ou quasi-fragiles tels que le verre, la céramique ou encore le plexiglas. Pour ce type de matériaux, on observe en effet que les déplacements relatifs d'un point par rapport à un autre ou encore l'ouverture de la fissure sont linéairement liées aux chargements mécaniques appliqués. Outre cette propriété de linéarité, on observe la similitude de profil d'ouverture de fissure pour divers types de chargement, ce qui permet de les décrire par un nombre réduit de paramètres. Néanmoins, les mêmes principes peuvent également être utilisés pour réaliser une estimation, plus approximative, sur des matériaux dont le comportement, en présence d'une fissure, présente une non-linéarité plus importante tels que le béton, le graphite ou des matériaux métalliques à basse température.

Il est essentiel, pour procéder à une analyse prédictive de la propagation d'une fissure basée sur le formalisme de la mécanique élastique linéaire de la rupture, de déterminer au préalable la direction ainsi que la position de la ou des pointes de la fissure.

Parmi les méthodes non destructives, on connait par exemple la corrélation d'images numériques (connue sous l'acronyme CIN) utilisant une caméra d'acquisition et qui permet, dans les conditions de forts éclairages et d'absence de mouvements de la caméra d'acquisition, d'atteindre une précision dans les mesures plus que satisfaisante. Néanmoins, la sensibilité de la corrélation d'images numériques aux mouvements de la caméra d'acquisition ainsi que la nécessité d'avoir des installations de traitements de données proches de la structure industrielle menacée rendent cette méthode difficilement utilisable pour un très grand nombre de structures industrielles.

Il est également connu de diffuser des neutrons ou des rayons X dans le matériau au sein duquel une fissure a été identifiée. Cette méthode est également non destructive, mais est incompatible avec un grand nombre de structures industrielles et n'est donc, de manière générale, pas recommandée en industrie.

Document JP2002349178 A divulgue mesurer la fissure d'une roche de base. Pour cela un trou est creusé dans la roche et un appareil de pressurisation est inséré dans le trou qui entre en contact et agit sur la paroi interne du trou. L'appareil de pressurisation est mis sous pression et ouvre la fissure de la paroi intérieure du trou. Un certain nombre d'électrodes sont prévus et un changement d'impédance entre chaque électrode accompagnant l'ouverture de la fissure est détecté. La fissure est mesurée par changement d'impédance.

La présente invention vient améliorer la situation.

A cet effet, il est proposé un procédé de détermination de caractéristiques d'une fissure dans un matériau. La présence de la fissure est préalablement détectée dans une zone de présence du matériau à l'aide d'une méthode non destructive. Le procédé comprend :

- déterminer au moins deux chargements mécaniques initiaux appliqués au matériau, chaque chargement mécanique étant défini par un champ vectoriel d'amplitude connue, chaque chargement mécanique initial étant responsable de la présence de ladite fissure ou ayant un impact sur ladite fissure,
- appliquer plusieurs chargements mécaniques d'ouverture de la fissure au matériau, chaque chargement mécanique d'ouverture étant une combinaison linéaire desdits au moins deux chargements mécaniques initiaux,
- mesurer, à l'aide d'au moins un instrument de mesure, un déplacement relatif d'un premier point par rapport à un deuxième point induit par chaque chargement mécanique d'ouverture, lesdits premier et deuxième points étant situés dans la zone de présence de la fissure, chaque instrument de mesure étant associé à un couple d'un premier et d'un deuxième point,
- appliquer plusieurs chargements mécaniques de fermeture de la fissure au matériau, chaque chargement mécanique de fermeture étant une combinaison linéaire desdits au moins deux chargements mécaniques initiaux,
- mesurer, à l'aide de chaque instrument de mesure, le déplacement relatif du premier point par rapport au deuxième point induit par chaque chargement mécanique de fermeture, et

- estimer, par des moyens informatiques, la direction de la fissure, en fonction de l'amplitude de chaque chargement mécanique de fermeture et d'ouverture appliqué au matériau et des déplacements relatifs mesurés par le ou les instruments de mesure.

Un tel procédé constitue une méthode non destructive de détermination des caractéristiques d'une fissure, et en particulier la direction de celle-ci, dans un matériau. La détermination, ou du moins l'estimation, de la direction de la fissure permet ultérieurement d'évaluer la nocivité de la fissure et d'entraver la propagation de celle-ci. Les fissures représentent en effet un danger pour une structure industrielle lorsqu'elle touche un matériau de cette structure.

Selon un aspect de l'invention, au moins un instrument de mesure est un extensomètre.

Selon un autre aspect de l'invention, les chargements mécaniques d'ouverture et de fermeture appliqués au matériau sont de faible amplitude, donc des chargements mécaniques assurant au matériau de conserver un comportement mécanique élastique et linéaire.

Il est connu de la personne du métier qu'un chargement mécanique est de faible amplitude lorsque son application n'altère pas le matériau et que celui-ci maintient un comportement élastique, même sous la contrainte de ce chargement mécanique.

En appliquant des chargements mécaniques de faible amplitude au matériau, ce dernier va adopter un comportement élastique et linéaire. Un matériau sur lequel s'appliquent le formalisme et les principes de la mécanique élastique linéaire de la rupture présente alors certaines propriétés utiles pour la détermination de la direction de la fissure. On observe en effet que les déplacements relatifs d'un point du matériau par rapport à un autre point du matériau ou encore l'ouverture de la fissure sont linéairement liées aux chargements mécaniques appliqués. Par ailleurs, on observe la similitude de profil d'ouverture de fissure pour divers types de chargement, ce qui permet de les décrire par un nombre réduit de paramètres.

Selon un autre aspect de l'invention, des coefficients de pondération de la combinaison linéaire des chargements mécaniques initiaux sont des nombres réels compris entre -1 et 1.

Selon un autre aspect de l'invention, la mesure du déplacement relatif d'un premier point par rapport à un deuxième point comprend la mesure du déplacement relatif du premier point par rapport au deuxième point selon une première direction et la mesure du déplacement relatif du premier point par rapport au deuxième point selon une deuxième direction orthogonale à la première direction.

Il est avantageux de déterminer la direction de la fissure dans un plan. On considère donc la projection du matériau dans un plan plutôt que de considérer le matériau en trois dimensions. On considère alors les caractéristiques de la projection de la fissure dans le plan choisi, et les premier et deuxième directions considérées sont des directions selon des vecteurs orthogonaux définissant le plan. Ce plan est avantageusement un plan d'intérêt préalablement choisi. En d'autres termes, la détermination de la direction de la fissure correspond en fait à la détermination de la direction de la projection de la fissure dans le plan. De même, comme détaillé dans la suite, la détermination de la position de la ou des pointes de la fissure correspond en fait à la détermination de la position de la projection de la ou des pointes de la fissure dans le plan.

Selon un autre aspect de l'invention, le procédé comprend en outre la détermination, pour chaque couple de premier et deuxième points, d'une surface d'ouverture représentant l'amplitude du chargement mécanique d'ouverture appliqué au matériau en fonction du déplacement relatif du premier point par rapport au deuxième point selon la première direction et du déplacement relatif du premier point par rapport au deuxième point selon la deuxième direction dans un repère *(O,x,y,z),* où x désigne le déplacement selon la première direction, y désigne le déplacement selon la deuxième direction et z désigne l'amplitude du chargement mécanique d'ouverture appliqué au matériau.

Selon un autre aspect de l'invention, la surface d'ouverture est semblable à un cône de révolution tronqué selon un plan orthogonal à la base du cône et comprenant le sommet du cône.

En effet, pour un matériau vérifiant parfaitement les hypothèses d'application du formalisme et des principes de la mécanique élastique linéaire de la rupture, la surface d'ouverture obtenue, pour des couples de points de mesure situés de part et d'autre de la fissure en proximité immédiate l'un de l'autre, sera un cône tronqué. Néanmoins, en pratique, ces hypothèses théoriques selon lesquelles le matériau adopte un comportement élastique et linéaire ne sont pas parfaitement vérifiées de sorte que la surface d'ouverture s'approche ou est semblable à un cône tronqué. De plus, ne connaissant qu'une zone de présence de la fissure, les couples de points de mesure ne seront pas forcément tous localisés de part et d'autre de la fissure.

Selon un autre aspect de l'invention, le procédé comprend en outre la détermination, pour chaque couple de premier et deuxième points, d'une surface de fermeture représentant l'amplitude du chargement mécanique de fermeture appliqué au matériau en fonction du déplacement relatif du premier point par rapport au deuxième point selon la première direction et du déplacement relatif du premier point par rapport au deuxième point selon la deuxième direction dans un repère (O,x,y,z), où x désigne le déplacement selon la première direction, y désigne le déplacement selon la deuxième direction et z désigne l'amplitude du chargement mécanique de fermeture appliqué au matériau.

Selon un autre aspect de l'invention, la surface de fermeture est semblable à un plan.

En effet, pour un matériau vérifiant parfaitement les hypothèses d'application du formalisme et des principes de la mécanique élastique linéaire de la rupture, la surface de fermeture obtenue, pour des couples de points de mesure situés de part et d'autre de la fissure en proximité immédiate l'un de l'autre, sera un plan. Néanmoins, en pratique, pour les mêmes raisons que celles évoquées précédemment pour la surface d'ouverture, ces hypothèses théoriques ne sont pas parfaitement vérifiées de sorte que la surface de fermeture s'approche ou est semblable à un plan.

Selon un autre aspect de l'invention, l'estimation de la direction de la fissure comprend :

- déterminer la droite d'intersection du plan de troncature du cône de révolution correspondant à la surface d'ouverture et du plan correspondant à la surface de fermeture,
- déterminer la projection orthogonale de la droite d'intersection sur le plan (Oxy) et un angle caractérisant la direction de la droite projetée obtenue.

L'angle en question correspond à l'angle formé par la droite projetée obtenue, donc la projection orthogonale de la droite d'intersection du plan de troncature du cône de révolution et du plan correspondant à la surface de fermeture, et par l'axe correspondant au déplacement relatif selon l'axe x ou l'axe correspondant au déplacement relatif selon l'axe y.

Dans un premier cas de figure, la fissure est une fissure débouchante. La fissure présente alors une ouverture à la frontière entre l'intérieur et l'extérieur du matériau. Dans cette situation, un seul instrument de mesure est installé pour mesurer le déplacement relatif d'un premier point par rapport à un deuxième point, les premier et deuxième points étant situés de part et d'autre de la fissure au niveau de l'ouverture à la frontière entre l'intérieur et l'extérieur du matériau. Les premier et deuxième points sont par exemple situés respectivement sur les lèvres de la fissure. L'angle caractérisant la direction de la droite projetée obtenue correspond alors à la direction de la fissure.

Toujours dans ce premier cas de figure, la longueur de la fissure correspondant à la distance entre l'ouverture et la pointe de la fissure est déterminée à l'aide d'une méthode non destructive. Selon un autre aspect de l'invention, le procédé comprend en outre la détermination de la pointe de la fissure en fonction de la direction et de la longueur de la fissure.

En effet, lorsque la fissure est débouchante, celle-ci présente une ouverture à la frontière entre l'intérieur et l'extérieur du matériau de sorte qu'on connaît la position exacte d'une partie au moins de la fissure, à savoir les points situés au niveau de l'ouverture. Ces informations permettent de sélectionner directement au moins un couple de premier et deuxième points pertinents, c'est-à-dire des points situés au niveau de l'ouverture, de part et d'autre de la fissure. Le caractère débouchant de la fissure permet également de mettre en oeuvre une méthode non destructive pour extraire la longueur de celle-ci. La combinaison des informations relatives à la direction et à la longueur de la fissure permettent alors de déterminer, ou du moins d'estimer, la position de la pointe de la fissure.

Alternativement, dans un deuxième cas de figure, la fissure est une fissure noyée et une pluralité d'instruments de mesure est installée. Selon un aspect de l'invention, le procédé comprend en outre la génération d'un histogramme des valeurs d'angle obtenues pour chaque couple de premier et deuxième points, la direction de la fissure étant déterminée en fonction de l'histogramme.

Toujours dans ce deuxième cas de figure, selon un autre aspect de l'invention, la direction de la fissure correspond à l'angle d'un maximum local de l'histogramme. Plus spécifiquement, le maximum local permettant de déterminer la direction de la fissure est le maximum local le plus éloigné de 0°.

Lorsque la fissure est noyée, on dispose de moins d'informations que lorsque la fissure est débouchante. En particulier, on ne connait qu'une zone de présence de la fissure et il n'est pas possible de garantir que les couples de points de mesure seront sélectionnés de sorte que, pour chacun de ces couples, le premier point et le deuxième point seront localisés de part et d'autre de la fissure. Il est donc nécessaire de couvrir le plus possible la zone de présence de la fissure et de réaliser des mesures de déplacement relatif pour chaque couple de points de la pluralité de couples de points de mesure. Un histogramme permet alors de transformer un problème à deux dimensions, les points étant repérés dans un plan, à un problème à une dimension, les points étant alors repérés sur une droite correspondant à la direction de la fissure. En effet, l'angle obtenu pour les couples de points de mesure localisés de part et d'autre de la fissure est significativement proche de la valeur d'angle caractérisant la direction de la fissure, de sorte qu'un histogramme fournissant un bilan statistique des valeurs d'angle obtenues permet de déterminer la direction de la fissure. Selon un autre aspect de l'invention, le procédé comprend en outre la détermination des positions respectives des pointes de la fissure, la détermination comprenant:

- tracer une courbe représentant, le long de la direction de la fissure, l'angle obtenu pour chaque couple de premier et deuxième points situés dans la direction de la fissure,
- déterminer, en fonction de l'angle correspondant à la direction de la fissure, un plateau de la courbe tracée, de sorte que les deux couples de premier et deuxième points marquant deux extrémités du plateau correspondent respectivement aux pointes de la fissure.

Les couples de points situés dans la direction de la fissure correspondent aux couples de points de mesure pour lesquels l'angle $\alpha_i$ obtenu est dans un voisinage de l'angle $\alpha$. La plage de valeurs d'angle $\alpha_i$ pour laquelle les couples de points de mesure sont considérés comme pertinents, c'est-à-dire dans la direction de la fissure, correspond à la plage de valeur allant du plus grand minimum local inférieur à $\alpha$ au plus petit minimum local supérieur à $\alpha$.

Comme expliqué précédemment, l'histogramme permet de déterminer la direction de la fissure ainsi que les couples de points de mesure pertinents. On sait alors que les pointes de la fissure sont localisées sur une droite. En repérant un palier sur la courbe représentant l'angle obtenu pour chaque couple de points de mesure situés de part et d'autre de la fissure, on peut alors en déduire la position des pointes de la fissure.

Selon un autre aspect de l'invention, le procédé comprend en outre, à l'aide de la direction, de la position de la ou des pointes de la fissure et du modèle de la mécanique élastique linéaire de la rupture, la prédiction de la propagation de la fissure afin d'en évaluer la nocivité.

Enfin, l'invention vise aussi un système de détermination de caractéristiques d'une fissure dans un matériau. La présence de la fissure est préalablement détectée dans une zone de présence du matériau à l'aide d'une méthode non destructive. Le système comprend :

- un module de diagnostic du matériau agencé pour déterminer au moins deux chargements mécaniques initiaux appliqués au matériau, chaque chargement mécanique étant défini par un champ vectoriel d'amplitude connue, chaque chargement mécanique initial étant responsable de la présence de ladite fissure ou ayant un impact sur ladite fissure,
- un dispositif d'application de chargements mécaniques agencé pour :

    appliquer plusieurs chargements mécaniques d'ouverture de la fissure au matériau, chaque chargement mécanique d'ouverture étant une combinaison linéaire desdits au moins deux chargements mécaniques initiaux, appliquer plusieurs chargements mécaniques de fermeture de la fissure au matériau, chaque chargement mécanique de fermeture étant une combinaison linéaire desdits au moins deux chargements mécaniques initiaux,

- au moins un instrument de mesure agencé pour mesurer un déplacement relatif d'un premier point par rapport à un deuxième point induit par chaque chargement d'ouverture et par chaque chargement de fermeture, lesdits premier et deuxième points étant situés dans la zone de présence de la fissure, chaque instrument de mesure étant associé à un couple d'un premier et d'un deuxième points, et
- une unité de traitement agencée pour estimer, en fonction de l'amplitude de chaque chargement mécanique de fermeture et d'ouverture appliqué au matériau et des déplacements relatifs mesurés par le ou les instruments de mesure, la direction de la fissure.

D'autres caractéristiques, détails et avantages de l'invention apparaîtront à la lecture de la description détaillée ci-après, et à l'analyse des dessins annexés, sur lesquels :

- la **figure 1** illustre un système de détermination de caractéristiques d'une fissure dans un matériau selon l'invention ;
- la **figure 2A** illustre un matériau présentant une fissure débouchante ;
- la **figure 2B** illustre un matériau présentant une fissure noyée ;
- la **figure 3** illustre un procédé de détermination de caractéristiques d'une fissure dans un matériau selon l'invention ;
- la **figure 4** illustre un quadrillage de la zone de présence de la fissure ;
- la **figure 5** illustre en détails une étape de détermination de la direction de la fissure et une étape de détermination de la position de la ou des pointes de la fissure du procédé illustré en **figure 3** ;
- la **figure 6** illustre une surface d'ouverture et une surface de fermeture permettant d'estimer la direction de la fissure ;
- la **figure 7** illustre un histogramme de valeurs d'angle obtenues pour plusieurs couples de points du matériau fissuré ; et
- la **figure 8** illustre une courbe représentant, le long de la direction de la fissure, l'angle obtenu pour chaque couple de points situés de part et d'autre de la fissure.

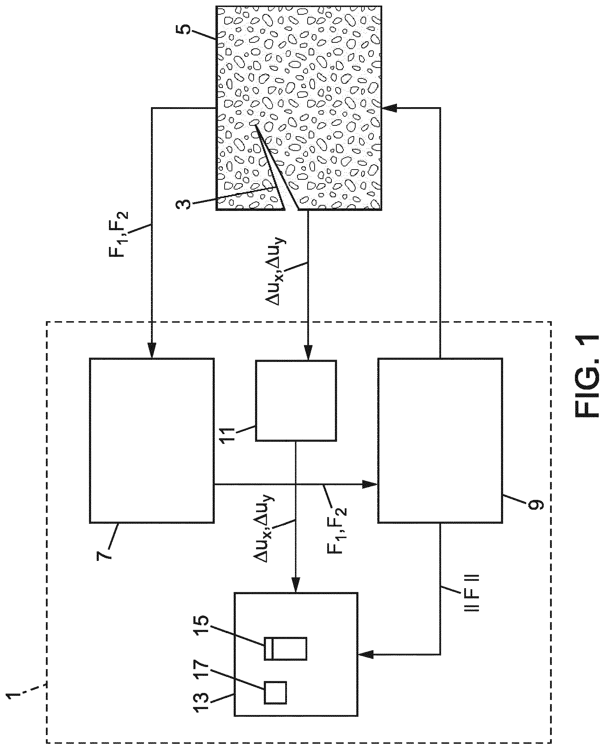

La **figure 1** illustre un système 1 de détermination de caractéristiques d'une fissure 3 dans un matériau 5. Le matériau 5 présentant la fissure 3 est également illustré sur la **figure 1.**

Dans le contexte de la présente invention, la fissure 3 a été préalablement détectée dans le matériau 5 à l'aide d'une méthode non destructive. Plus généralement, on parle de contrôle non destructif (connu sous l'acronyme CND), c'est-à-dire l'ensemble des méthodes permettant d'évaluer l'intégrité d'un matériau et de détecter la présence d'une fissure sans dégrader le matériau. Par exemple, la fissure 3 a été détectée dans le matériau 5 à l'aide d'une technique de contrôle par courants de Foucault basée sur la circulation de courants induits dans un matériau apte à conduire l'électricité. Parmi les méthodes non destructives, il est également possible d'avoir recours à un contrôle par ultrasons basé sur la transmission et la réflexion d'onde de type ultrasons à l'intérieur du matériau.

Typiquement, le matériau 5 est un matériau dit fragile ou quasi fragile tel que le verre, la céramique ou encore le plexiglas. Pour ce type de matériaux, on observe que les déplacements relatifs d'un point par rapport à un autre ou encore l'ouverture de la fissure sont linéairement liées aux chargements mécaniques appliqués. Ces caractéristiques du matériau 5 sont particulièrement avantageuses car, comme expliqué dans la suite de la description, elles permettent d'utiliser le formalisme et les principes de la mécanique élastique linéaire de la rupture (connue sous l'acronyme MELR) pour réaliser une analyse prédictive de la propagation de la fissure 3 dans le matériau 5. Néanmoins, les mêmes principes peuvent également être utilisés pour réaliser une estimation grossière sur des matériaux dont le comportement, en présence d'une fissure, présente une non-linéarité plus importante. Ainsi, le matériau 5 peut également être un matériau présentant une non-linéarité plus importante tel que le béton, le graphite ou des matériaux métalliques à basse température.

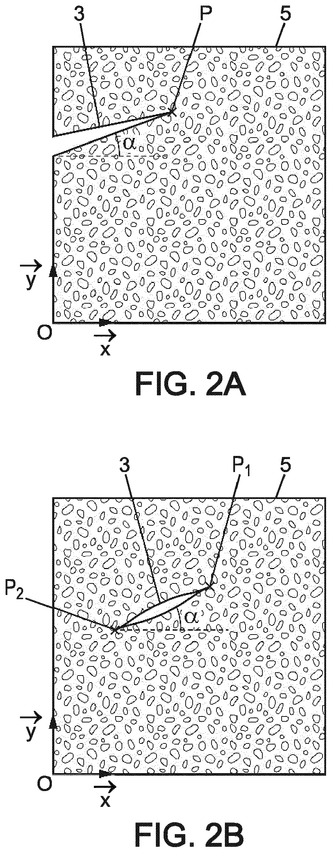

Le système 1 est agencé pour déterminer des caractéristiques de la fissure 3 identifiée dans le matériau 5. Plus spécifiquement, le système 1 est agencé pour estimer la direction de la fissure 3. Avantageusement, le système 1 est agencé en outre pour déterminer la position de la ou des pointes de la fissure 3. En effet, dans le cas d'une fissure 3 débouchante, cette dernière présente une seule pointe, aussi appelée front de la fissure, tandis que dans le cas d'une fissure 3 noyée, cette dernière présente alors deux pointes. Ces deux cas de figure sont notamment illustrés en **figure 2A** et **figure 2B**. La **figure 2A** illustre une fissure 3 débouchante tandis que la **figure 2B** illustre une fissure 3 noyée.

La détermination de caractéristiques de la fissure 3 du matériau 5, et en particulier la détermination de la direction et de la position de la ou des pointes de la fissure 3, permet d'utiliser par la suite le formalisme et les principes de la mécanique élastique linéaire de la rupture pour réaliser une analyse prédictive de la propagation de la fissure 3 dans le matériau 5. La prédiction de la propagation de la fissure 3 permet d'en évaluer la nocivité, notamment lorsque le matériau 5 est un élément d'une structure industrielle à risque. Une telle analyse prédictive permet par la suite de mettre en oeuvre des moyens permettant d'entraver la propagation de la fissure.

Comme illustré sur la **figure 1,** le système 1 comprend un module de diagnostic 7, un dispositif 9 d'application de chargements mécaniques, au moins un instrument de mesure 11 et une unité de traitement 13.

Le module de diagnostic 7 est agencé pour déterminer au moins deux chargements mécaniques initiaux appliqués au matériau 5. Un chargement mécanique est défini par un champ vectoriel. Chaque chargement mécanique peut être modifié par modification de son amplitude où le champ vectoriel correspondant est multiplié par un nombre scalaire, on parle alors de changement de l'amplitude de chargement. Un chargement mécanique initial est un chargement mécanique d'amplitude connue. Un chargement mécanique peut désigner une pression extérieure appliquée au matériau 5, le poids du matériau 5, une flexion mécanique, une traction ou tout autre effort mécanique subi par le matériau 5. Ces chargements mécaniques initiaux sont à l'origine de la formation de la fissure 3 ou favorisent sa progression.

Comme expliqué précédemment, les chargements mécaniques initiaux sont des chargements mécaniques susceptibles de venir solliciter la fissure, c'est-à-dire de favoriser son ouverture ou sa fermeture. A ce titre, la détection préalable de la présence de la fissure dans le matériau 5 à l'aide d'une méthode non destructive peut également permettre de déterminer des chargements mécaniques initiaux responsables de la présence de la fissure ou ayant un impact sur celle-ci. Les deux chargements mécaniques initiaux peuvent alors être deux chargements mécaniques parmi les chargements mécaniques ainsi détectés.

Dans l'exemple illustré en **figure 1,** le module de diagnostic 7 a détecté deux chargements mécaniques initiaux $F_1$ et $F_2$. Bien entendu, on comprend que le module de diagnostic 7 peut déterminer plus de deux chargements mécaniques initiaux.

Le module de diagnostic 7 est agencé en outre pour transmettre des informations relatives aux chargements mécaniques initiaux déterminés au dispositif 9 d'application de chargements mécaniques.

Le dispositif 9 d'application de chargements mécaniques est agencé pour appliquer un ou plusieurs chargements mécaniques d'ouverture de la fissure 3 au matériau 5. Chaque chargement mécanique d'ouverture appliqué au matériau 5 est une combinaison linéaire des chargements mécaniques initiaux identifiés par le module de diagnostic 7. Un chargement mécanique d'ouverture permet, lorsqu'il est appliqué au matériau 5, d'ouvrir la fissure 3, c'est-à-dire d'écarter l'une de l'autre les lèvres de la fissure 3.

Le dispositif 9 est agencé en outre pour appliquer un ou plusieurs chargements mécaniques de fermeture de la fissure au matériau. De même que les chargements mécaniques d'ouverture, chaque chargement mécanique de fermeture est une combinaison linéaire des chargements mécaniques initiaux. A l'inverse d'un chargement mécanique d'ouverture, un chargement mécanique de fermeture permet, lorsqu'il est appliqué au matériau 5, de rapprocher l'une de l'autre les lèvres de la fissure ou du moins de ne pas les écarter l'une de l'autre.

Par exemple, un chargement mécanique de fermeture peut être obtenu à partir d'un chargement mécanique d'ouverture par multiplication par le nombre scalaire -1 du champ vectoriel associé, ce qui a pour conséquence un changement de la direction du chargement mécanique. Inversement, on comprend également qu'il est possible, à partir d'un chargement mécanique de fermeture, de générer un chargement mécanique d'ouverture par multiplication du champ vectoriel associé au chargement mécanique de fermeture par le nombre scalaire -1. A partir de deux chargements mécaniques initiaux, il est donc toujours possible de produire deux chargements mécaniques d'ouverture et deux chargements mécaniques de fermeture.

Pour déterminer si un chargement mécanique appliqué par le dispositif 9 est un chargement mécanique d'ouverture ou de fermeture, la personne du métier dispose de plusieurs méthodes connues.

Par exemple, la classification d'un chargement mécanique (ouverture ou fermeture) peut être obtenue en déterminant les facteurs d'intensité des contraintes (connus sous l'acronyme FIC). Lorsqu'un chargement mécanique est appliqué au matériau 5, la mesure des facteurs d'intensité de contraintes permet de déterminer si la fissure répond à une sollicitation du type ouverture ou du type fermeture.

Il est également possible d'utiliser le ou les instruments de mesure 11 du système 1. En effet, comme détaillé dans la suite de la description, l'instrument de mesure 11 est associé à un couple de points, comprenant donc un premier point et un deuxième point, et est agencé pour mesurer un déplacement relatif du premier point par rapport au deuxième point. Les premier et deuxième points sont situés dans une zone de présence de la fissure 3. Ainsi, lorsqu'un chargement mécanique est appliqué par le dispositif 9 au matériau, chaque instrument de mesure 11 mesure le déplacement relatif du premier point par rapport au deuxième. Ainsi, pour un chargement mécanique donné, si la distance entre le premier point et le deuxième point augmente, le chargement mécanique sera classifié comme un chargement mécanique d'ouverture. A l'inverse, si la distance entre le premier point et le deuxième point diminue, le chargement mécanique sera classifié comme un chargement mécanique de fermeture.

Dans l'exemple illustré en **figure 1,** le module de diagnostic 7 a identifié deux chargements mécaniques initiaux $F_1$ et $F_2$. Les chargements mécaniques d'ouverture et de fermeture appliqués par le dispositif 9 au matériau 5 sont alors de la forme suivante :

$$F = \beta \cdot F_1 + \gamma \cdot F_2$$

où :

- F est un chargement mécanique d'ouverture ou de fermeture appliqué au matériau 5 par le dispositif 9 ; et
- $\beta$ et $\gamma$ sont des nombres réels de sorte que l'un au moins des deux est non nul.

La formule précédente s'interprète comme application simultanée de deux chargements mécaniques $F_1$ et $F_2$ dont les amplitudes ont été modifiées par les facteurs multiplicatifs respectifs, aussi appelé nombres scalaires, $\beta$ et y.

Avantageusement, les chargements mécaniques d'ouverture et de fermeture appliqués au matériau 5 par le dispositif 9 sont de faible amplitude de manière à ce que le matériau adopte un comportement mécanique élastique et linéaire. On se place ici dans la logique du contrôle non destructif, c'est-à-dire que les mesures réalisées et l'application des chargements mécaniques d'ouverture et de fermeture ne doivent pas altérer l'état du matériau 5. Le concept de chargement mécanique dit « de faible amplitude » est connu de la personne du métier et désigne un chargement mécanique qui assure que l'état de contrainte reste dans le domaine d'élasticité du matériau testé, donc ici le matériau 5. On s'assure ainsi, que le formalisme et les principes de la mécanique élastique linéaire de la rupture s'appliquent bien au matériau 5 soumis aux chargements mécaniques d'ouverture et de fermeture appliqués par le dispositif 9. Par exemple, des coefficients de pondération de la combinaison linéaire des chargements mécaniques initiaux sont des nombres réels compris entre 0 et 1. En revenant à l'exemple décrit précédemment, on a alors avantageusement :

$$|\beta| \ll 1$$

$$|\gamma| \ll 1$$

Le dispositif 9 d'application de chargements mécaniques est agencé en outre pour transmettre l'amplitude, on parle aussi d'intensité, de chaque chargement mécanique d'ouverture et fermeture appliqué au matériau 5 à l'unité de traitement 13. L'amplitude d'un chargement mécanique est par exemple calculée par application d'une norme au chargement mécanique concerné. Dans l'exemple illustré en **figure 1,** l'amplitude d'un chargement mécanique F est notée ∥F∥.

La norme utilisée pour calculer l'amplitude d'un chargement mécanique appliqué au matériau 5 est par exemple une norme mathématique définie sur un espace vectoriel de dimension égale à la dimension de la base constituée par l'ensemble des chargements mécaniques initiaux détectés par le module de diagnostic 7 et utilisés pour appliquer des chargements mécaniques d'ouverture et de fermeture au matériau 5. Cette dimension est donc supérieure ou égale à 2. Etant donné que les mêmes chargements mécaniques initiaux sont utilisés pour générer l'ensemble des chargements mécaniques d'ouverture et de fermeture, la norme est par exemple fonction des coefficients de pondération. En reprenant l'exemple décrit précédemment et illustré en **figure 1,** l'amplitude d'un chargement mécanique F est par exemple définie à l'aide de la norme suivante :

$$\|F\| = \sqrt{\beta^2 + \gamma^2}$$

D'une manière plus générale, lorsque le module de diagnostic 7 a détecté un nombre n de chargements mécaniques initiaux, où n est un entier naturel supérieur ou égal à 2, l'amplitude d'un chargement mécanique F est par exemple défini comme suit :

$$\|F\| = \sqrt[n]{\sum_{k=1}^{n} |\delta_k|^n}$$

où : $\delta_k$ est le k-ième coefficient de pondération de la combinaison linéaire des $n$ chargements mécaniques initiaux.

Par ailleurs, la norme utilisée pour calculer l'amplitude d'un chargement mécanique F appliqué au matériau 5 peut également être fonction de l'amplitude des chargements mécaniques initiaux.

L'instrument de mesure 11 est agencé pour mesurer un déplacement relatif d'un premier point par rapport à un deuxième point, les premier et deuxième points étant situés dans une zone de présence de la fissure 3. Autrement dit, chaque instrument de mesure 11 est configuré pour être associé à un couple de points du matériau 5, avantageusement à proximité de la fissure 3, et pour mesurer le déplacement relatif d'un point du couple de points associé par rapport à l'autre point du couple de points.

Plus spécifiquement, dans le cadre de la présente invention, chaque instrument de mesure 11 est agencé pour mesurer le déplacement relatif d'un premier point par rapport à un deuxième point induit par chaque chargement d'ouverture et par chaque chargement de fermeture. En effet, chaque chargement d'ouverture appliqué au matériau 5 est susceptible d'induire le déplacement relatif d'un premier point par rapport au deuxième point associé à ce premier point. Dans le cadre de l'invention, on comprend donc que, en réponse à l'application d'un chargement mécanique d'ouverture au matériau 5, chaque instrument de mesure 11 mesure le déplacement relatif du premier point par rapport au deuxième point, le couple formé par les premier et deuxième points en question étant le couple de points associé à l'instrument de mesure 11 considéré. De même, en réponse à l'application d'un chargement mécanique de fermeture au matériau 5, chaque instrument de mesure 11 mesure le déplacement relatif du premier point par rapport au deuxième point, le couple formé par les premier et deuxième points en question étant le couple de points associé à l'instrument de mesure 11 considéré.

Avantageusement, la mesure du déplacement relatif d'un premier point par rapport à un deuxième point comprend la mesure du déplacement relatif du premier point par rapport au deuxième point selon une première direction et la mesure du déplacement relatif du premier point par rapport au deuxième point selon une deuxième direction orthogonale à la première direction. On se retrouve ainsi avec des mesures selon deux dimensions au lieu de trois dimensions. On comprend donc que, dans la suite de la description, on considère non pas la fissure 3 mais, plus exactement, la projection de la fissure 3 dans le plan d'intérêt choisi. La détermination des caractéristiques de la fissure 3 doit donc être comprise, dans la suite de la description, comme la détermination des caractéristiques de la projection de la fissure 3 dans le plan d'intérêt. Par exemple, de nouveau en référence à la **figure 2A** et à la **figure 2B,** on considère la projection du matériau 5 dans un plan (Oxy) plutôt que de considérer le matériau 5 en trois dimensions.

En d'autres termes, la mesure du déplacement relatif d'un premier point par rapport à un deuxième point comprend la mesure du déplacement relatif du premier point par rapport au deuxième point selon une première direction et la mesure du déplacement relatif du premier point par rapport au deuxième point selon une deuxième direction orthogonale à la première direction, les première et deuxième direction définissant, avec un point O, un plan d'intérêt de sorte qu'on considère la projection de la fissure 3 dans le plan d'intérêt et de sorte que les caractéristiques de la fissure 3 sont, en fait, les caractéristiques de la projection de la fissure 3 dans le plan d'intérêt.

Dans le contexte de la présente invention, on considère donc en fait la projection de la fissure 3 dans un plan d'intérêt, donc ici le plan (Oxy) pour passer d'un problème en trois dimensions à un problème en deux dimensions. La détermination de la direction de la fissure 3 correspond donc plus exactement à la détermination de la direction de la projection de la fissure 3 dans le plan (Oxy). De même, la détermination de la position de la ou des pointes de la fissure 3 est en fait la détermination de la position de la projection de la ou des pointes de la fissure 3 dans le plan (Oxy). Le plan (Oxy) est par exemple un plan d'intérêt défini préalablement. Par exemple, lorsque le matériau 5 correspond à un tuyau d'une structure industrielle, un plan d'intérêt est un plan de coupe longitudinale du tuyau. Le déplacement relatif d'un premier point par rapport à un deuxième point mesuré par l'instrument de mesure 11 comprend alors la mesure du déplacement relatif selon la direction x et la mesure du déplacement relatif selon la direction y.

Dans l'exemple illustré en **figure 1,** l'instrument de mesure 11 mesure, suite à l'application d'un chargement mécanique au matériau 5 un déplacement $\Delta u_x$ selon la direction x et un déplacement $\Delta u_y$ selon la direction y.

L'instrument de mesure 11 est par exemple un extensomètre. A titre d'exemples, l'instrument de mesure 11 peut être un extensomètre optique, un extensomètre mécanique, un extensomètre de type LVDT (acronyme anglophone pour « *Linear Variable Differential Transformer* ») ou tout autre type d'extensomètre.

Dans l'exemple illustré en **figure 1,** un seul instrument de mesure 11 est illustré. Néanmoins, on comprend que plusieurs instruments de mesure 11 peuvent être installés de sorte que chacun est agencé pour mesurer le déplacement relatif d'un premier point par rapport à un deuxième point, chaque instrument de mesure 11 étant associé à un couple d'un premier point et d'un deuxième point. En d'autres termes, dans le cas où le système 1 comprend plusieurs instruments de mesure 11, chacun de ces instruments est associé à un couple de points du matériau 5 qui lui est propre.

Comme expliqué précédemment, la fissure 3 a été préalablement détectée dans le matériau 5 à l'aide d'une méthode non destructive telle que le contrôle par courants de Foucault ou le contrôle par ultrasons. De telles méthodes permettent de recueillir des informations sur la fissure, et notamment si celle-ci est une fissure débouchante ou une fissure noyée.

La détermination du cas de figure dans lequel on se trouve permet de déterminer le nombre d'instruments de mesure tels que l'instrument de 11 à installer ainsi que le positionnement de chacun. Dans le cas où la fissure 3 est une fissure débouchante, un seul instrument de mesure 11 est suffisant. Dans cette situation, il est par ailleurs particulièrement avantageux de sélectionner un premier point et un deuxième point situés de part et d'autre de la fissure 3. En d'autres termes, il est avantageux que les premier et deuxième points soient situés respectivement sur les lèvres de la fissure 3. C'est notamment le cas dans l'exemple illustré en **figure 1.** En revanche, dans le cas de figure où la fissure 3 est une fissure noyée, plusieurs instruments de mesure 11 sont requis. Bien entendu, l'homme du métier comprend qu'il est également possible d'utiliser plusieurs instruments de mesure 11 dans le cas où la fissure 3 est une fissure débouchante, ce qui permet d'améliorer la précision des mesures obtenues et donc la détermination des caractéristiques de la fissure 3.

L'instrument de mesure 11 est agencé en outre pour transmettre les mesures de déplacements relatifs à l'unité de traitement 13. On comprend ici que, pour chaque chargement mécanique d'ouverture appliqué au matériau 5 par le dispositif 9, chaque instrument de mesure 11 transmet le déplacement relatif induit mesuré au sein du couple de premier et deuxième points auquel il est associé à l'unité de traitement 13. De même, pour chaque chargement mécanique de fermeture appliqué au matériau 5 par le dispositif 9, chaque instrument de mesure 11 transmet le déplacement relatif mesuré au sein du couple de premier et deuxième points auquel il est associé à l'unité de traitement 13.

Il est bien entendu possible que, suite à un chargement mécanique d'ouverture ou de fermeture appliqué au matériau 5 par le dispositif 9, aucun déplacement relatif ne soit mesuré au sein d'un couple d'un premier et d'un deuxième points. Dans un tel cas, il est considéré que le déplacement relatif est nul et l'instrument de mesure 11 associé au couple de points en question transmet alors à l'unité de traitement 13 l'information d'un déplacement relatif nul.

Par ailleurs, comme expliqué précédemment, le ou les instruments de mesure 11 peuvent permettre au dispositif 9 de déterminer si le chargement mécanique appliqué par celui-ci au matériau 5 est un chargement mécanique d'ouverture ou de fermeture. En effet, pour un chargement mécanique donné appliqué par le dispositif 9 au matériau 5, chaque instrument de mesure 11 peut mesurer le déplacement relatif du premier point par rapport au deuxième point de sorte que, si ce déplacement relatif correspond à un éloignement des premier et deuxième points, il s'agit d'un chargement mécanique d'ouverture. En revanche, si ce déplacement relatif correspond à un rapprochement des premier et deuxième points, il s'agit d'un chargement mécanique de fermeture.

L'unité de traitement 13 est agencée pour déterminer, en fonction de l'amplitude de chaque chargement mécanique de fermeture et d'ouverture appliqué au matériau 5 et des déplacements relatifs mesurés par le ou les instruments de mesure 11, des caractéristiques de la fissure 3 présente dans le matériau 5. Plus spécifiquement, l'unité de traitement 13 est agencée pour estimer la direction de la fissure 3. Avantageusement, l'unité de traitement 13 est agencée en outre pour déterminer la position de la ou des pointes de la fissure 3. Comme expliqué précédemment et illustrée en **figure 2A,** la fissure 3 présente une pointe P lorsqu'elle est débouchante. A l'inverse, et comme illustrée en **figure 2B,** la fissure 3 présente deux pointes $P_1$ et $P_2$ lorsqu'elle est noyée.

Par ailleurs, l'unité de traitement 13 est agencée en outre pour recevoir l'information de l'amplitude de chaque chargement mécanique d'ouverture et de fermeture appliqué au matériau 5 par le dispositif 9. L'unité de traitement 13 est agencée en outre pour recevoir les mesures de déplacements relatifs réalisés par le ou les instruments de mesure 11 et induits par les chargements mécaniques d'ouverture et de fermeture appliqués par le dispositif 9 au matériau 5.

L'unité de traitement 13 comprend une mémoire 15 et un processeur 17.

La mémoire 15 est configurée pour stocker les instructions d'un programme informatique dont la mise en oeuvre, par le processeur 17, se traduit par le fonctionnement de l'unité de traitement 13. Le fonctionnement de l'unité de traitement 13 et l'utilisation des différentes informations et données transmises par les autres entités du système 1, et notamment par le ou les instruments de mesure 11 et par le dispositif 9, seront décrits plus en détails ci-après.

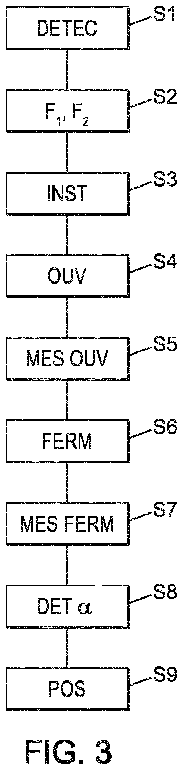

Un procédé de détermination de caractéristiques d'une fissure dans un matériau selon l'invention va maintenant être décrit en référence à la **figure 3.**

Lors d'une première étape S1, la présence de la fissure 3 est détectée dans le matériau 5 à l'aide d'une méthode non destructive. Par exemple, comme expliqué précédemment, la fissure 3 est détectée dans le matériau 5 à l'aide d'un contrôle par courants de Foucault ou d'un contrôle par ultrasons. Une méthode non destructive permet de déterminer une zone de présence de la fissure 3 dans le matériau 5. Une telle méthode permet également de déterminer si la fissure 3 est une fissure débouchante telle que celle illustrée en **figure 2A** ou une fissure noyée telle que celle illustrée en **figure 2B.**

Lors d'une deuxième étape S2, le module de diagnostic 7 détermine au moins deux chargements mécaniques initiaux appliqués au matériau 5, chaque chargement mécanique étant défini par un champ vectoriel d'amplitude connue. Dans l'exemple illustré en **figure 1,** le module de diagnostic 7 identifie deux chargements mécaniques initiaux $F_1$, $F_2$. Comme expliqué précédemment, un chargement initial désigne par exemple une pression extérieure appliquée au matériau 5, le poids du matériau 5, une flexion mécanique, une traction ou tout autre effort mécanique subi par le matériau 5. Comme expliqué précédemment, un chargement mécanique est un champ vectoriel caractérisé par une amplitude.

Les chargements mécaniques initiaux sont des chargements mécaniques susceptibles de venir solliciter la fissure 3.

Lors de la détection préalable de la présence de la fissure dans le matériau 5 mise en oeuvre lors de l'étape S1, le module de diagnostic 7 peut également déterminer des chargements mécaniques initiaux responsables de la présence de la fissure ou ayant un impact sur celle-ci. Les deux chargements mécaniques initiaux peuvent alors être deux chargements mécaniques parmi les chargements mécaniques ainsi détectés.

Le module de diagnostic 7 transmet les informations relatives aux chargements mécaniques initiaux identifiés au dispositif 9 d'application de chargements mécaniques.

Lors d'une troisième étape S3, un ou plusieurs instruments de mesure 11 sont installés au niveau de la zone de présence de la fissure 3. Dans le cas où la méthode non destructive a permis d'identifier que la fissure 3 est une fissure débouchante, un seul instrument de mesure 11 est suffisant et est installé avantageusement au niveau de l'ouverture de la fissure 3. Dans le cas où la méthode non destructive a permis d'identifier que la fissure 3 est une fissure noyée, plusieurs instruments de mesure 11 sont avantageusement installés dans la zone de présence de la fissure 3.

Comme expliqué précédemment, chaque instrument de mesure 11 est associé à un couple d'un premier point et d'un deuxième point. Un instrument de mesure 11, associé à un couple de premier et deuxième points, est agencé pour mesurer le déplacement relatif du premier point par rapport au deuxième point.

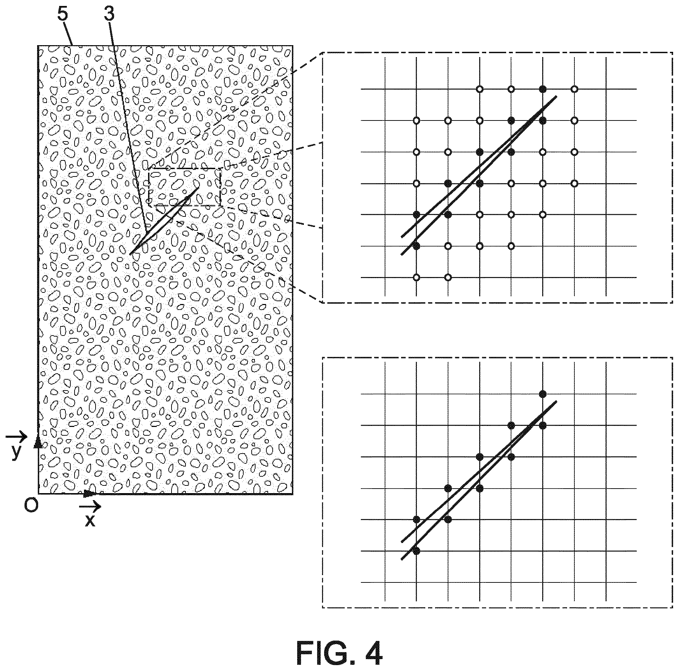

La **figure** 4 illustre un quadrillage d'une partie de la zone de présence de la fissure 3. Comme expliqué précédemment, on considère la projection du matériau 5 dans un plan *(Oxy)* de manière à ne considérer les déplacements relatifs des points que selon deux directions orthogonales. En effet, comme expliqué précédemment, l'objet de la présente invention est de déterminer des caractéristiques de la projection de la fissure 3 dans un plan d'intérêt du matériau 5. Ainsi, on détermine en fait la direction de la projection de la fissure 3 dans le plan d'intérêt choisi, ici le plan *(Oxy)*. De même on détermine la position de la projection de la ou des pointes de la fissure 3 dans le même plan d'intérêt (Oxy). Ce quadrillage de la zone de présence permet de définir des couples de premier et deuxième points. Par exemple, un couple de premier et deuxième points est formé par deux points adjacents. Chaque couple de premier et deuxième points ainsi formé est associé à un instrument de mesure 11 agencé pour mesurer le déplacement relatif du premier point par rapport au deuxième point. Bien entendu, lorsque la zone de présence de la fissure est quadrillée, la direction de la fissure 3 et la position de ses pointes $P_1$ et $P_2$ ne sont pas connues de sorte qu'on n'est pas encore en mesure de déterminer quels sont les couples de premier et deuxième points pour lesquelles les mesures à venir sont pertinentes.

Lors d'une quatrième étape S4, le dispositif 9 applique un ou plusieurs chargements mécaniques d'ouverture de la fissure 3 au matériau 5. Chaque chargement mécanique d'ouverture est une combinaison linéaire des chargements mécaniques initiaux identifiés par le module de diagnostic 7.

Chaque chargement mécanique d'ouverture appliqué au matériau 5 entraîne une ouverture de la fissure 3, c'est-à-dire un écartement des lèvres de la fissure 3.

Avantageusement, les chargements mécaniques d'ouverture appliqués au matériau 5 sont de faible amplitude de manière à ce que le matériau 5 adopte un comportement mécanique élastique et linéaire. Par ailleurs, le dispositif 9 contrôle l'amplitude de chaque chargement mécanique d'ouverture. Le dispositif 9 transmet l'amplitude de chaque chargement mécanique d'ouverture appliqué à l'unité de traitement 13.

Lors d'une cinquième étape S5, en réponse à chaque chargement mécanique d'ouverture appliqué au matériau 5, chaque instrument de mesure 11 associé à un couple de premier et deuxième points mesure le déplacement relatif du premier point par rapport au deuxième point induit par le chargement mécanique d'ouverture considéré.

Ainsi, chaque instrument de mesure 11 réalise autant de mesures de déplacement relatif que le dispositif 9 applique de chargements mécaniques d'ouverture au matériau 5. Par ailleurs, chaque instrument de mesure 11 transmet les mesures réalisées à l'unité de traitement 13. On comprend donc ici qu'une correspondance peut être établie, au niveau de l'unité de traitement 13 entre l'amplitude d'un chargement mécanique d'ouverture appliqué au matériau 5 et les mesures de déplacement relatif, induit par le chargement mécanique d'ouverture en question, respectivement réalisées par les instruments de mesure 11. Bien entendu, lorsque la fissure 3 est une fissure débouchante et qu'un seul instrument de mesure 11 a été installé, l'amplitude de chaque chargement mécanique d'ouverture est associée à une seule mesure de déplacement relatif, c'est-à-dire celle réalisée par le seul instrument de mesure 11 installé.

Lors d'une sixième étape S6, le dispositif 9 applique un ou plusieurs chargements mécaniques de fermeture de la fissure 3 au matériau 5. De même que pour les chargements mécaniques d'ouverture, chaque chargement mécanique de fermeture est une combinaison linéaire des chargements mécaniques initiaux identifiés par le module de diagnostic 7.

Chaque chargement mécanique de fermeture appliqué au matériau 5 entraîne une fermeture de la fissure 3, c'est-à-dire un rapprochement des lèvres de la fissure 3.

Avantageusement, les chargements mécaniques de fermeture appliqués au matériau 5 sont de faible amplitude de manière à ce que le matériau 5 adopte un comportement mécanique élastique et linéaire. Le dispositif 9 transmet l'amplitude de chaque chargement mécanique de fermeture à l'unité de traitement 13.

Lors d'une septième étape S7, en réponse à chaque chargement mécanique de fermeture appliqué au matériau 5, chaque instrument de mesure 11 associé à un couple de premier et deuxième points mesure le déplacement relatif du premier point par rapport au deuxième point induit par le chargement mécanique de fermeture considéré.

Ainsi, chaque instrument de mesure 11 réalise autant de mesures de déplacement relatif que le dispositif 9 applique de chargements mécaniques de fermeture au matériau 5. Par ailleurs, chaque instrument de mesure 11 transmet les mesures réalisées à l'unité de traitement 13. On comprend donc ici qu'une correspondance peut être établie, au niveau de l'unité de traitement 13 entre l'amplitude d'un chargement mécanique de fermeture appliqué au matériau 5 et les mesures de déplacement relatif, induit par le chargement mécanique de fermeture en question, respectivement réalisées par les instruments de mesure 11. Bien entendu, lorsque la fissure 3 est une fissure débouchante et qu'un seul instrument de mesure 11 a été installé, l'amplitude de chaque chargement mécanique de fermeture est associée à une seule mesure de déplacement relatif, c'est-à-dire celle réalisée par le seul instrument de mesure 11 installé.

Dans l'exemple illustré en **figure 3,** le dispositif 9 applique d'abord des chargements mécaniques d'ouverture puis des chargements mécaniques de fermeture. Néanmoins, on comprend que, alternativement, le dispositif 9 peut appliquer d'abord des chargements mécaniques de fermeture puis ensuite seulement des chargements mécaniques d'ouverture.

Par ailleurs, comme expliqué précédemment, lorsque le dispositif 9 applique un chargement mécanique au matériau 5, le ou les instruments de mesure 11 peuvent permettre, dans un mode de réalisation, de déterminer si le chargement mécanique appliqué est un chargement mécanique d'ouverture, ce qui correspond donc à l'étape S4, ou un chargement mécanique de fermeture, ce qui correspond à l'étape S6. Ainsi, si la mesure réalisée par un instrument de mesure 11 met en évidence une augmentation de la distance entre les premier et deuxième points associés, le chargement mécanique est un chargement mécanique d'ouverture tandis que, si la mesure réalisée par un instrument de mesure 11 met en évidence une diminution de la distance entre les premier et deuxième points associés, le chargement mécanique est un chargement mécanique de fermeture.

Bien entendu, si plusieurs instruments de mesure 11 sont sollicités au cours de l'application d'un chargement mécanique donné au matériau 5 par le dispositif 9, il est possible par exemple de comparer le nombre d'instruments de mesure 11 détectant une ouverture de la fissure et le nombre d'instruments de mesure 11 détectant une fermeture de la fissure pour déterminer si le chargement mécanique donné est un chargement mécanique d'ouverture ou de fermeture. Il est également possible de calculer une moyenne de la variation de la distance entre les premier et deuxième points sur l'ensemble des instruments de mesure 11 pour déterminer si le chargement mécanique considéré est un chargement mécanique d'ouverture ou de fermeture de la fissure 3.

Lors d'une huitième étape S8, l'unité de traitement 13 détermine, en fonction de l'amplitude de chaque chargement mécanique de fermeture et d'ouverture appliqué au matériau 5 et des déplacements relatifs mesurés par le ou les instruments de mesure 11, la direction de la fissure 3.

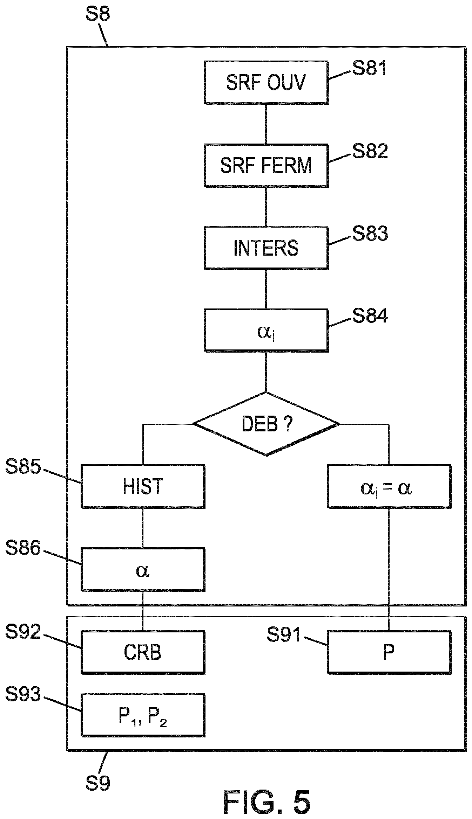

Cette étape S8 de détermination de la direction de la fissure 3 va à présent être décrite plus en détails en référence à la **figure 5.**

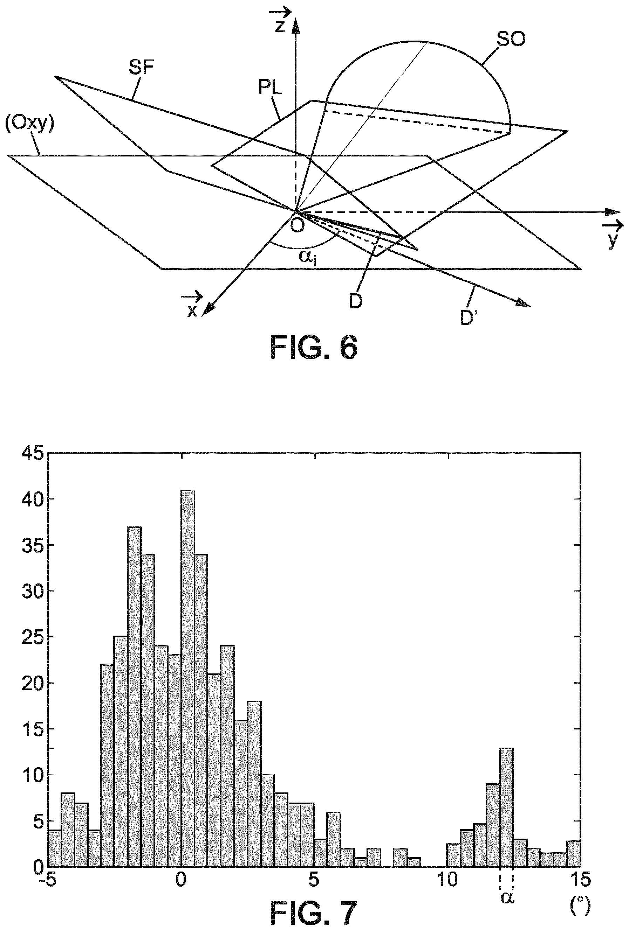

Lors d'une étape S81, l'unité de traitement 13 détermine, pour chaque couple de premier et deuxième points, une surface d'ouverture SO représentant l'amplitude du chargement mécanique d'ouverture appliqué au matériau 5 en fonction du déplacement relatif du premier point par rapport au deuxième point selon la première direction et du déplacement relatif du premier point par rapport au deuxième point selon la deuxième direction dans un repère $(O,x,y,z)$, où x désigne le déplacement selon la première direction, y désigne le déplacement selon la deuxième direction et z désigne l'amplitude du chargement appliqué au matériau. Une telle surface d'ouverture SO est par exemple illustrée en **figure 6.**

Comme expliqué précédemment, les chargements mécaniques d'ouverture appliqués au matériau 5 sont avantageusement de faible amplitude de manière à ce que le matériau 5 adopte un comportement mécanique élastique et linéaire. Dans un tel mode de réalisation, et comme illustrée en **figure 6,** les inventeurs ont constaté que la surface d'ouverture SO est semblable à un cône de révolution tronqué selon un plan PL orthogonal à la base du cône et comprenant le sommet du cône. Ici, le sommet du cône correspond à l'origine O du repère (O,x,y,z). En effet, l'application d'un chargement mécanique d'ouverture d'amplitude nulle au matériau 5 est équivalente à l'absence d'application d'un chargement mécanique d'ouverture, de sorte que, logiquement, aucun déplacement n'est provoqué et donc détecté, quel que soit le couple de premier et deuxième points considéré. La valeur du déplacement relatif selon la première direction x est donc nulle de même que la valeur du déplacement relatif selon la deuxième direction y.

Par l'expression « semblable à un cône tronqué », on entend que, pour un matériau 5 vérifiant parfaitement les hypothèses d'application du formalisme et des principes de la mécanique élastique linéaire de la rupture, la surface d'ouverture SO obtenue, pour des couples de points de mesure situés de part et d'autre de la fissure 3 en proximité immédiate l'un de l'autre, sera un cône tronqué. Néanmoins, en pratique, ces hypothèses théoriques selon lesquelles le matériau 5 adopte un comportement élastique et linéaire ne sont pas parfaitement vérifiées de sorte que la surface d'ouverture SO s'approche ou est semblable à un cône tronqué. Dans ce cas, le plan PL de troncature du cône peut être obtenu à l'aide d'une approximation des moindres carrés.

Les inventeurs ont en effet constaté que, pour un matériau donné 5, le chargement mécanique appliqué pour ouvrir la fissure 3 selon une contrainte de traction normale au plan de la fissure 3, aussi appelé plus communément mode I dans la littérature portant sur la mécanique de la rupture, est généralement plus faible que le chargement mécanique nécessaire pour atteindre la même ouverture selon une contrainte de cisaillement agissant parallèlement au plan de la fissure 3 et orthogonale au front de la fissure 3, aussi appelé plus communément mode II. Le cône correspondant à la surface d'ouverture SO est donc aplati dans la direction de la fissure 3.

Lors d'une étape S82, l'unité de traitement 13 détermine, pour chaque couple de premier et deuxième points, une surface de fermeture SF représentant l'amplitude du chargement mécanique de fermeture appliqué au matériau 5 en fonction du déplacement relatif du premier point par rapport au deuxième point selon la première direction et du déplacement relatif du premier point par rapport au deuxième point selon la deuxième direction dans le repère (O,x,y,z). Une telle surface de fermeture SF est illustrée sur la **figure 6.**

Comme expliqué précédemment, les chargements mécaniques de fermeture appliqués au matériau 5 sont avantageusement de faible amplitude de manière à ce que le matériau 5 adopte un comportement mécanique élastique et linéaire. Dans un tel mode de réalisation, et comme illustrée en **figure 6,** les inventeurs ont constaté que la surface de fermeture SF est semblable à un plan.

Par l'expression « semblable à un plan », on entend que, pour un matériau 5 vérifiant parfaitement les hypothèses d'application du formalisme et des principes de la mécanique élastique linéaire de la rupture, la surface de fermeture SF obtenue, pour des couples de points de mesure situés de part et d'autre de la fissure 3 en proximité immédiate l'un de l'autre, sera un plan. Néanmoins, en pratique, ces hypothèses théoriques selon lesquelles le matériau 5 adopte un comportement élastique et linéaire ne sont pas parfaitement vérifiées de sorte que la surface de fermeture SF s'approche ou est semblable à un plan. Dans ce cas, le plan auquel est semblable la surface de fermeture SF peut être obtenu à l'aide d'une approximation des moindres carrés.

Les inventeurs ont en effet constaté que, pour un matériau 5 donné, l'application d'un chargement mécanique de fermeture de la fissure 3 ne dépend que très peu, voire pas, de la composante de ce chargement mécanique de fermeture correspondant à une contrainte de traction normale au plan de la fissure 3, donc une composante de mode I. Autrement dit, la réponse en ouverture de la fissure 3 dépendra presque exclusivement de la composante selon une contrainte de cisaillement, donc une composante de mode II. Ainsi, aucun déplacement relatif ne sera détecté dans une direction orthogonale à la direction de la fissure 3, d'où l'obtention d'un plan pour la surface de fermeture SF.

Concernant la forme de la surface d'ouverture SO, semblable à un cône tronqué, et la forme de la surface de fermeture SF, semblable à un plan, quelques éléments d'explication sont fournis ci-après.

Dans le cadre de la mécanique élastique linéaire de la rupture, les déplacements induits par l'application d'un chargement mécanique de faible amplitude au matériau 5 sont linéaires par rapport à l'intensité du chargement mécanique, même en présence d'une fissure 3. Cette relation linéaire entre les déplacements et l'intensité du chargement mécanique est illustrée par l'équation suivante :

$$\overrightarrow{\Delta U} = \hat{S}\vec{F}$$

où :

- $\overrightarrow{\Delta U}$ est le déplacement d'un point du matériau 5,

- F est le chargement mécanique appliqué au matériau 5, et
- $\hat{S}$ est le tenseur de souplesse du matériau 5.

Le tenseur de souplesse du matériau 5 dépend principalement des caractéristiques géométriques de celui-ci. En particulier, en présence d'une fissure 3, on peut distinguer la réponse du matériau 5 dans le cas où la fissure 3 est ouverte avec un tenseur de souplesse $\widehat{S_o}$ et dans le cas où la fissure 3 est fermée avec seule possibilité de glissement des lèvres, ce qui correspond au mode II de cisaillement défini précédemment, avec un tenseur de souplesse $\widehat{S_F}$.

Les modes I et II, qui correspondent donc respectivement à l'ouverture de la fissure 3 et au cisaillement de la fissure 3, permettent de définir les chargements mécaniques respectifs $\vec{F_I}$ et $\vec{F_{II}}$. On comprend que le chargement mécanique $\vec{F_I}$ est dans une direction orthogonale à la direction de la fissure tandis que le chargement mécanique $\vec{F_{II}}$ est dans la direction de la fissure 3. Dans la littérature, les chargements mécaniques $\vec{F_I}$ et $\vec{F_{II}}$ correspondant aux modes I et II sont choisis de sorte que :

$$\begin{pmatrix} 1 \\ 0 \end{pmatrix} = \widehat{S_o}\vec{F_I} \qquad \begin{pmatrix} 0 \\ 1 \end{pmatrix} = \widehat{S_o}\vec{F_{II}}$$

$$\begin{pmatrix} 0 \\ 0 \end{pmatrix} = \widehat{S_F}\vec{F_I} \qquad \begin{pmatrix} 0 \\ 1 \end{pmatrix} = \widehat{S_F}\vec{F_{II}}$$

Le repère considéré est le repère orthonormé centré sur la pointe de la fissure et formé par les vecteurs $\vec{x_1}$ et $\vec{x_2}$ correspondant respectivement à la direction d'ouverture de la fissure, donc une direction orthogonale à la direction de la fissure 3, et à la direction de la fissure 3.

Les deux premières équations caractérisent le fait qu'il est possible de solliciter une fissure 3 ouverte à la fois en mode I et en mode II, tandis que les deux dernières équations caractérisent le fait qu'une fissure 3 fermée ne peut être sollicitée qu'en mode II. Encore une fois, les déplacements $\vec{\Delta U}$ sont dans le repère local $(\vec{x_1} ; \vec{x_2})$ de la fissure 3.

Par ailleurs, du fait de la linéarité de la réponse du matériau 5, une ouverture mixte de la fissure 3, c'est-à-dire avec un déplacement $\Delta U_I$ dans la direction $\vec{x_1}$ et un déplacement $\Delta U_{II}$ dans la direction $\vec{x_2}$ peut être obtenue en appliquant un chargement mécanique $\vec{F}$ vérifiant :

$$\vec{F} = \Delta U_I\vec{F_I} + \Delta U_{II}\vec{F_{II}}$$

A noter par ailleurs que les chargements mécaniques nécessaires pour générer le chargement mécanique $\vec{F}$ à la fois en mode I et en mode II ne sont pas nécessairement orthogonaux si ces chargements sont appliqués loin de la pointe de la fissure 3.

Ainsi, si on trace en trois dimensions ($\Delta U_I$; $\Delta U_{II}$; $\|\vec{F}\|$) la norme du chargement mécanique appliqué au matériau 5 en fonction des déplacements dans le repère local $(\vec{x_1} ; \vec{x_2})$ de la fissure 3, on obtient :

- Un cône avec un point de dégénérescence au point de coordonnées ($\Delta U_I = 0$; $\Delta U_{II} = 0$; $\|\vec{F}\| = 0$) pour les chargements mécaniques d'ouverture de la fissure :

$$\|\vec{F}\| = \sqrt{\Delta U_I{}^2\|\vec{F_I}\|^2 + \Delta U_{II}{}^2\|\vec{F_{II}}\|^2 + 2\Delta U_1\Delta U_{II}(\vec{F_I} \cdot \vec{F_{II}})}$$

L'équation précédente donnant la norme du chargement mécanique F correspond bien à l'équation d'un cône dans le cas où les chargements mécaniques $\vec{F_I}$ et $\vec{F_{II}}$ ne sont pas colinéaires. Un changement de variable dans le plan comprenant la pointe de la fissure et défini par les vecteurs $\vec{x_1}$ et $\vec{x_2}$ tel qu'une rotation ($\Delta U_I \Rightarrow \Delta V_I$; $\Delta U_{II} \Rightarrow \Delta V_{II}$) permet notamment d'obtenir une équation du type :

$$\|\vec{F}\| = \sqrt{v_{S_o}^I \Delta V_I{}^2 + v_{S_o}^{II} \Delta V_{II}{}^2}$$

Où $v_{S_o}^I$ et $v_{S_o}^{II}$ sont les valeurs propres de la matrice de rigidité en ouverture symétrisée $(\hat{S}_o^{-1} + {}^t\hat{S}_o^{-1})/2$, c'est-à-dire la partie symétrique de l'inverse du tenseur de souplesse $\widehat{S_o}$. Le cône est aplati ($v_{S_o}^I \gg v_{S_o}^{II}$) dans la direction de la fissure (l'axe de $\Delta U_{II}$), car $\|\vec{F_I}\| < \|\vec{F_{II}}\|$, ce qui reflète le fait que l'effort appliqué pour ouvrir la fissure en mode I est généralement plus faible que celui nécessaire pour atteindre la même ouverture en mode II.

- Un plan ($\Delta U_{II}$; $\|\vec{F}\|$) pour les chargements mécaniques de fermeture de la fissure. En effet, comme expliqué précédemment, un chargement mécanique de fermeture ne provoque pas de déplacement dans la direction $\vec{x_1}$ orthogonale à la direction $\vec{x_2}$ de la fissure dans le plan (Oxy).

Théoriquement, pour une structure suivant parfaitement les lois de la mécanique élastique linéaire de la rupture en présence d'une fissure, on obtient donc un demi-cône coupé par un plan orthogonal à l'axe de la fissure si on couvre le spectre complet des chargements mécaniques d'ouverture appliqués au matériau 5.

Dans l'exemple illustré en **figure 5,** l'unité de traitement 13 détermine la surface d'ouverture SO puis la surface de fermeture SF. Néanmoins, on comprend que, alternativement, l'unité de traitement 13 peut déterminer la surface de fermeture SF puis ensuite seulement la surface d'ouverture SO.

Lors d'une étape S83, dans le mode de réalisation dans lequel la surface d'ouverture SO est semblable à un cône tronqué et dans lequel la surface de fermeture SF est semblable à un plan, l'unité de traitement 13 détermine la droite D d'intersection du plan PL de troncature du cône de révolution correspondant à la surface d'ouverture SO et du plan correspondant à la surface de fermeture SF.

Lors d'une étape S84, l'unité de traitement 13 détermine ensuite la projection orthogonale D' de la droite D sur le plan (Oxy). L'unité de traitement 13 détermine alors un angle $\alpha_i$ caractérisant la direction de la droite D' projetée obtenue. Plus précisément, et en référence à la **figure 6,** l'angle $\alpha_i$ correspond à l'angle formé par la droite D' projetée et par l'axe correspondant au déplacement relatif selon l'axe x.

De manière équivalente, on peut déterminer l'angle formé par la droite D' et par l'axe correspondant au déplacement relatif selon y.

On comprend bien entendu que les étapes S81, S82, S83 et S84 sont mises en oeuvre pour chaque couple de premier et deuxième points de sorte que chaque angle $\alpha_i$ déterminé à l'issue de l'étape S84 est associé à un couple de premier et deuxième points et, de manière équivalente, à l'instrument de mesure 11 correspondant.

Pour la mise en oeuvre de la suite du procédé, on utilise les résultats de la première étape S1 concernant la nature de la fissure 3. A l'issue de la première étape S1, on a en effet déterminé, à l'aide d'une méthode non destructive, si la fissure 3 est une fissure débouchante, telle que celle illustré en **figure 2A,** ou une fissure noyée, telle que celle illustrée en **figure 2B.**

On se place tout d'abord dans la situation dans laquelle la fissure 3 est une fissure débouchante. Dans ce cas de figure, avantageusement, un seul instrument de mesure 11 est installé à proximité de la fissure 3. Préférentiellement, les premier et deuxième points auxquels est associé l'instrument de mesure 11 sont situés de part et d'autre de l'ouverture de la fissure 3, donc à l'entrée de la fissure 3. Contrairement au cas de la fissure noyée dans laquelle le caractère très vague de la zone de présence contraint à utiliser plusieurs instruments de mesure 11 et à déterminer, comme expliqué dans la suite de la description, quels sont les couples de points pertinents, le cas de la fissure débouchante permet d'avoir des informations beaucoup plus précises sur la zone de présence. En effet, lorsque la fissure 3 est débouchante, celle-ci présente une ouverture à la frontière entre l'intérieur et l'extérieur du matériau 5 de sorte qu'on connait la position exacte d'une partie au moins de la fissure 3, à savoir les points situés au niveau de l'ouverture. Ces informations permettent de sélectionner directement au moins un couple de premier et deuxième points pertinents, c'est-à-dire ceux situés au niveau de l'ouverture, de part et d'autre de la fissure 3.

Dans un tel cas, les étapes S81, S82, S83 et S84 décrites précédemment ont été mises en oeuvre pour un seul couple de premier et deuxième points. Dans un tel mode de réalisation, l'angle $\alpha_i$ illustré en **figure 6** et caractérisant la direction de la droite D' projetée obtenue correspond donc à la direction de la fissure 3.

Dans le cas où la fissure 3 est débouchante et où plusieurs instruments de mesure 11 ont été installés au lieu d'un seul, la direction de la fissure 3 est par exemple déterminée en calculant la moyenne des angles $\alpha_i$ obtenus pour chaque couple de premier et deuxième points.

On se place à présent dans la situation dans laquelle la fissure 3 est une fissure noyée. Dans ce cas de figure, avantageusement, plusieurs instruments de mesure 11 sont installés dans la zone de présence de la fissure 3.

Les étapes S81, S82, S83 et S84 sont, comme expliqué précédemment, mises en oeuvre pour chaque couple de premier et deuxième points. Dans le cas illustré en **figure 4** dans lequel la fissure 3 est noyée et où un quadrillage est utilisé pour définir des couples de premier et deuxième points et pour recueillir des données sur toute la zone de présence de la fissure 3, un angle $\alpha_i$ tel que celui obtenu à l'issue de l'étape S84 est obtenu pour chaque couple de premier et deuxième points. Certaines des valeurs d'angle $\alpha_i$ sont pertinentes, à savoir les couples de premier et deuxième points proches de la fissure, idéalement situés de part et d'autre de la fissure 3, tandis que d'autres valeurs d'angle $\alpha_i$ ne sont pas pertinentes, à savoir les couples éloignés de la fissure 3 dans la zone de présence. Il est donc nécessaire de distinguer les couples de premier et deuxième points pertinents de ceux qui ne le sont pas.

Pour ce faire, lors d'une étape S85, l'unité de traitement 13 génère un histogramme des valeurs d'angle $\alpha_i$ obtenues pour chaque couple de premier et deuxième points, la direction de la fissure 3 étant déterminée en fonction de l'histogramme. Un tel histogramme est par exemple illustré en **figure 7.**

Comme illustré en **figure 7,** l'unité de traitement 13 détermine pour chaque valeur d'angle, ou pour chaque intervalle de valeurs d'angle, le nombre de couple de premier et deuxième points pour lesquels l'angle $\alpha_i$ déterminé lors de l'étape S84 correspond à la valeur d'angle ou est compris dans l'intervalle de valeurs d'angle. Dans l'exemple illustré en **figure 7,** toutes les valeurs d'angle $\alpha_i$ déterminées sont comprises entre -5° et 15°. L'intervalle [-5° ;15°] est subdivisés en intervalles de longueur 0,5°. A titre d'exemple, on constate sur la **figure 7** que, pour plus de 40 couples de premier et deuxième points, une valeur d'angle $\alpha_i$ comprise entre 0,5° et 1° a été déterminée. En revanche, une valeur d'angle $\alpha_i$ comprise entre 9,5° et 10° n'a été déterminée pour aucun couple de premier et deuxième points.

Lors d'une étape S86, l'unité de traitement 13 détermine la direction de la fissure 3 en fonction de l'histogramme généré. Par exemple, la direction de la fissure correspond à l'angle d'un maximum local de l'histogramme.

On désigne par maximum local une valeur d'angle, ou un intervalle de valeurs d'angle dans le cas de la **figure 7,** obtenue par davantage de couples de premier et deuxième points, strictement, que les valeurs d'angle, ou intervalles de valeurs d'angle, immédiatement voisines. Dans l'histogramme illustré en **figure 7,** on distingue plusieurs maxima locaux. Par exemple, l'intervalle de valeurs d'angle $\alpha_i$ [0,5° ;1°[ est un maximum local puisque plus d'une quarantaine de couples de premier et deuxième points ont conduit, à l'étape S84, à la détermination d'un angle $\alpha_i$ dans cet intervalle, contre moins de 35 pour l'intervalle [1° ; 1,5°[ et moins de 25 pour l'intervalle [0°, 0,5°[. Toujours à titre d'exemple, l'intervalle [-4,5° ;-4°[ correspond également à un maximum local de même que l'intervalle [5,5° ;6°[.

L'obtention d'un ou plusieurs maxima locaux à proximité de l'angle $\alpha_i$=0° n'est pas surprenante. En effet, comme expliqué précédemment, les couples de premier et deuxième points ont été sélectionnés dans la zone de présence de la fissure 3, par exemple avec un quadrillage, sans connaître la direction ni la position des pointes de la fissure 3. Ainsi, un nombre important de couples de premier et deuxième points non pertinents peuvent potentiellement être sélectionnés. Sur la **figure 4,** les points non pertinents ont été représentés par des cercles tandis que les points pertinents ont été représentés par des disques, à savoir des cercles pleins. Comme illustré, les premier et deuxième points des couples non pertinents sont certes dans la zone de présence de la fissure 3 mais sont éloignés de celle-ci de sorte que l'application d'un chargement mécanique d'ouverture ou de fermeture par le dispositif 9 n'entraîne qu'un faible déplacement relatif, voire aucun déplacement, du premier point par rapport au deuxième point, d'où l'obtention d'un angle $\alpha_i$ proche de 0°. Etant donné la sur-représentation statistique des couples de premier et deuxième points non pertinents on retrouve donc dans l'histogramme beaucoup de valeurs $\alpha_i$ proches de 0°.

Néanmoins, l'utilisation de plusieurs instruments de mesure 11 pour couvrir la zone de présence de la fissure 3 permet également de sélectionner des couples de premier et deuxième points pertinents. Par exemple, un couple de premier et deuxième points est pertinent si les premier et deuxième points sont situés de part et d'autre dans la fissure 3. Contrairement aux couples de premier et deuxième points non pertinents, l'application d'un chargement mécanique d'ouverture ou de fermeture entraine un déplacement relatif caractéristique, substantiel, du premier point par rapport au deuxième point. Ainsi, pour un couple de points pertinent, un angle $\alpha_i$ éloigné de 0° est susceptible d'être obtenu à l'issue de l'étape S84.

Dans un mode de réalisation, la direction de la fissure 3 est déterminée en sélectionnant le maximum local le plus éloigné de 0°. En référence à nouveau à la **figure 7** illustrant l'histogramme généré, le maximum local le plus éloigné de 0° est l'intervalle [12° ;12,5°[. La direction de la fissure 3 est donc caractérisée par une valeur d'angle $\alpha$ comprise entre 12° et 12,5°.

Bien entendu, l'homme du métier comprend que la direction de la fissure 3 peut tout à fait être caractérisée par une valeur d'angle proche de 0°. Dans un tel cas, le principe selon lequel la direction de la fissure 3 correspond à la valeur d'angle la plus éloignée, donc la moins proche, de 0° s'applique également.

A l'issue de la huitième étape S8, on dispose donc de la direction de la fissure 3, ou plus exactement de la direction de la projection de la fissure 3 dans le plan (Oxy), qui est caractérisée par un angle $\alpha$ dans un plan de projection du matériau 5. En d'autres termes, connaissant la direction de la fissure 3 et le ou couples de premier et deuxième points pertinents à l'issue de l'étape S8, on est en mesure de déterminer, dans le matériau 5, une droite sur laquelle on sait que la ou les pointes de la fissure 3 sont situées, ou plus exactement une droite sur laquelle sont situées les projections de la ou des pointes de la fissure 3 dans le plan (Oxy).

Lors d'une neuvième étape S9, l'unité de traitement 13 déterminer la position de la ou des pointes de la fissure 3.

En référence à nouveau à la **figure 5,** la détermination de la position de la ou des pointes de la fissure 3 dépend de la nature de la fissure 3.

On considère tout d'abord le cas dans lequel la fissure 3 est une fissure débouchante. Dans un tel cas, la fissure 3 comprend une unique pointe P.

Lors d'une étape S91, la longueur de la fissure 3 correspondant à la distance entre l'ouverture et la pointe P de la fissure 3 peut être déterminée à l'aide d'une méthode non destructive. L'unité de traitement 13 détermine alors la position de la pointe P de la fissure 3 en fonction de la direction et de la longueur de la fissure 3.

On considère à présent le cas dans lequel la fissure 3 est une fissure noyée. Dans un tel cas, la fissure 3 comprend deux pointes $P_1$ et $P_2$.

Lors d'une étape S92, l'unité de traitement 13 trace une courbe représentant, le long de la direction de la fissure 3, l'angle $\alpha_i$ obtenu pour chaque couple de premier et deuxième points situés dans la direction de la fissure 3. En d'autres termes, au cours de cette étape S92, seuls sont pris en considération les couples de premier et deuxième points pertinents, c'est-à-dire ceux comprenant un premier point et un deuxième point, situés de part et d'autre de la fissure 3, mais aussi ceux situés dans la direction de la fissure 3 au-delà des pointes de la fissure 3. En outre, la détermination de la direction de la fissure 3 permet de déterminer une droite sur laquelle sont situées les pointes de la fissure 3. On peut noter en effet que l'histogramme obtenu lors de l'étape S85 permet de déterminer directement les couples de points situés le long de la fissure 3. Par exemple, les couples de points situés le long de la fissure 3 correspondent aux couples de points pour lesquels l'angle $\alpha_i$ obtenu est proche de l'angle $\alpha$ déterminé et caractérisant la direction de la fissure 3. Au sens de l'histogramme tel que celui illustré en **figure 7**, les couples de points pertinents désignent par exemple les couples de points de mesure pour lesquels l'angle $\alpha_i$ obtenu est dans un voisinage de l'angle $\alpha$. Par exemple, la plage de valeurs d'angle $\alpha_i$ pour laquelle les couples de points de mesure sont considérés comme pertinents correspond à la plage de valeur allant du plus grand minimum local inférieur à $\alpha$ au plus petit minimum local supérieur à $\alpha$. Par exemple, toujours en référence à l'exemple illustré en **figure 7,** les couples de points de mesure pertinents sont ceux pour lesquels un angle $\alpha_i$ compris entre 9,5° et 14° est obtenu.

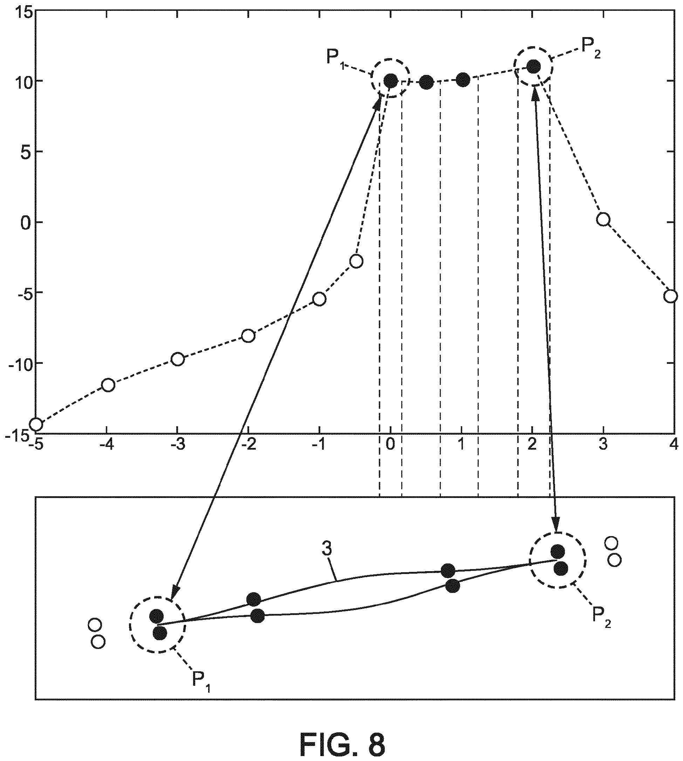

La connaissance de la direction de la fissure 3 permet donc de réduire un problème à deux dimensions, puisque les points considérés sont situés dans le plan à un problème à une dimension puisqu'on ne considère que les points localisés dans la direction de la fissure 3. Une telle courbe est illustrée en **figure 8.**

Lors d'une étape S93, l'unité de traitement 13 détermine, en fonction de l'angle $\alpha$ correspondant à la direction de la fissure 3, un plateau de la courbe tracée, de sorte que les deux couples de premier et deuxième points marquant les deux extrémités du plateau correspondent respectivement aux pointes de la fissure 3.

Sur la courbe illustrée en **figure 8,** on a représenté l'ensemble des couples de premier et deuxième points dans la direction de la fissure 3 ainsi que la valeur d'angle $\alpha_i$ associée à chaque couple. On distingue alors les couples de premier et deuxième points situés le long de la fissure 3, c'est-à-dire entre les pointes de la fissure 3, et les couple de premier et deuxième points situés au-delà des pointes de la fissure 3. Les valeurs d'angle $\alpha_i$ des couples de premier et deuxième points le long de la fissure 3 définissent un plateau. On comprend alors que les extrémités de ce plateau correspondent aux pointes de la fissure 3. L'unité de traitement 13 est alors apte à déterminer la position des pointes $P_1$ et $P_2$ de la fissure 3.

A l'issue de l'étape S91 ou de l'étape S93, on dispose donc de la direction de la fissure 3 ainsi que de la position de la ou des pointes de la fissure 3. De telles informations permettent alors par exemple, à l'aide du modèle de la mécanique élastique linéaire de la rupture, la prédiction de la propagation de la fissure 3 afin d'en évaluer la nocivité. Lorsque la fissure 3 présente une nocivité importante et est par exemple susceptible de dégrader dangereusement une structure industrielle, il est alors par exemple possible d'appliquer des chargements mécaniques au matériau 5 afin d'entraver la propagation de la fissure 3. Par exemple, le dispositif 9 d'application de chargements mécaniques peut être utilisé pour entraver la propagation de la fissure 3 dans le matériau.

Dans la description précédente de l'invention, il a été question de la détermination de la direction de la fissure 3 et de la position de la ou des pointes de la fissure 3. Il doit bien entendu être compris ici qu'en fait d'une « détermination », il s'agit d'une « estimation » dans les limites des capacités et de la précision des différents équipements et instruments utilisés pour mettre en oeuvre le procédé. Ainsi, le procédé et le système décrits permettent d'estimer avec une certaine précision, et donc une certaine marge d'erreur, la direction de la fissure 3 ainsi que la position de la ou des pointes de la fissure 3.

La présente invention présente plusieurs avantages.

Tout d'abord, le procédé proposé constitue une méthode non destructive de détermination de caractéristiques de la fissure. Ce procédé est par ailleurs applicable dans toute structure industrielle et permet d'obtenir une précision suffisante pour prédire par la suite la propagation de la fissure dans le matériau.

Par ailleurs, le contexte de la mécanique élastique linéaire de la rupture et l'application de chargements mécaniques d'ouverture et de fermeture de faible amplitude permettent de mettre en oeuvre le procédé sans pour autant solliciter excessivement la fissure ou provoquer sa propagation.

Enfin, le système visé par la présente invention a ceci d'avantageux qu'il peut s'appliquer à des structures industrielles en fonctionnement, à la manière d'un système embarqué.

**Revendications**

1. Procédé de détermination de caractéristiques d'une fissure (3) dans un matériau (5), la présence de ladite fissure étant préalablement détectée (S1) dans une zone de présence du matériau à l'aide d'une méthode non destructive, le procédé comprenant :

   - déterminer (S2) au moins deux chargements mécaniques initiaux ($F_1$, $F_2$) appliqués au matériau, chaque chargement mécanique étant défini par un champ vectoriel d'amplitude connue, chaque chargement mécanique initial étant responsable de la présence de ladite fissure ou ayant un impact sur ladite fissure,
   - appliquer (S4) plusieurs chargements mécaniques d'ouverture de la fissure au matériau, chaque chargement mécanique d'ouverture étant une combinaison linéaire desdits au moins deux chargements mécaniques initiaux,
   - mesurer (S5), à l'aide d'au moins un instrument de mesure (11), un déplacement relatif d'un premier point par rapport à un deuxième point induit par chaque chargement mécanique d'ouverture, lesdits premier et deuxième points étant situés dans la zone de présence de la fissure, chaque instrument de mesure étant associé à un couple d'un premier et d'un deuxième point,
   - appliquer (S6) plusieurs chargements mécaniques de fermeture de la fissure au matériau, chaque chargement mécanique de fermeture étant une combinaison linéaire desdits au moins deux chargements mécaniques initiaux,
   - mesurer (S7), à l'aide de chaque instrument de mesure, le déplacement relatif du premier point par rapport au deuxième point induit par chaque chargement mécanique de fermeture, et
   - estimer (S8), par des moyens informatiques, la direction ($\alpha$) de la fissure, en fonction de l'amplitude de chaque chargement mécanique de fermeture et d'ouverture appliqué au matériau et des déplacements relatifs mesurés par le ou les instruments de mesure.

2. Procédé selon la revendication 1, dans lequel au moins un instrument de mesure est un extensomètre.

3. Procédé selon la revendication 1 ou 2, dans lequel les chargements mécaniques d'ouverture et de fermeture appliqués au matériau sont de faible amplitude, donc des chargements mécaniques assurant au matériau de conserver un comportement mécanique élastique et linéaire.

4. Procédé selon la revendication 3, dans lequel des coefficients de pondération ($\beta$, $\gamma$) de la combinaison linéaire des au moins deux chargements mécaniques initiaux sont des nombres réels compris entre -1 et 1.

5. Procédé selon la revendication 3 ou 4, dans lequel la mesure du déplacement relatif d'un premier point par rapport à un deuxième point comprend la mesure du déplacement relatif dudit premier point par rapport audit deuxième point selon une première direction et la mesure du déplacement relatif dudit premier point par rapport audit deuxième point selon une deuxième direction orthogonale à la première direction.

6. Procédé selon la revendication 5, comprenant en outre la détermination (S81), pour chaque couple de premier et deuxième points, d'une surface d'ouverture (SO) représentant l'amplitude du chargement mécanique d'ouverture appliqué au matériau en fonction du déplacement relatif du premier point par rapport au deuxième point selon la première direction et du déplacement relatif du premier point par rapport au deuxième point selon la deuxième direction dans un repère *(O,x,y,z),* où x désigne le déplacement selon la première direction, y désigne le déplacement selon la deuxième direction et z désigne l'amplitude du chargement mécanique d'ouverture appliqué au matériau.

7. Procédé selon la revendication 6, dans lequel la surface d'ouverture est semblable à un cône de révolution tronqué selon un plan (PL) orthogonal à la base du cône et comprenant le sommet dudit cône.

8. Procédé selon l'une des revendications 5 à 7, comprenant en outre la détermination (S82), pour chaque couple de premier et deuxième points, d'une surface de fermeture (SF) représentant l'amplitude du chargement mécanique de fermeture appliqué au matériau en fonction du déplacement relatif du premier point par rapport au deuxième point selon la première direction et du déplacement relatif du premier point par rapport au deuxième point selon la deuxième direction dans un repère (O,x,y,z), où x désigne le déplacement selon la première direction, y désigne le déplacement selon la deuxième direction et z désigne l'amplitude du chargement mécanique de fermeture appliqué au matériau.

9. Procédé selon la revendication 8, dans lequel la surface de fermeture est semblable à un plan.

10. Procédé selon les revendications 7 et 9 prises en combinaison, dans lequel l'estimation de la direction de la fissure comprend :

   - déterminer (S83) la droite (D) d'intersection du plan de troncature du cône de révolution correspondant à la surface d'ouverture et du plan correspondant à la surface de fermeture,
   - déterminer la projection orthogonale de la droite d'intersection sur le plan (Oxy) et un angle ($\alpha_i$) caractérisant la direction de la droite (D') projetée obtenue, ledit angle ($\alpha_i$) correspondant à l'angle formé par la droite (D') projetée obtenue et par l'axe correspondant au déplacement relatif selon l'axe x ou l'axe correspondant au déplacement relatif selon y.

11. Procédé selon la revendication 10, dans lequel la fissure est une fissure débouchante présentant une ouverture à la frontière entre l'intérieur et l'extérieur du matériau et dans lequel un seul instrument de mesure est installé pour mesurer le déplacement relatif d'un premier point par rapport à un deuxième point, lesdits premier et deuxième points étant situés de part et d'autre de la fissure au niveau de ladite ouverture, l'angle caractérisant la direction de la droite projetée obtenue correspondant à la direction de la fissure.

12. Procédé selon la revendication 11, dans lequel la longueur de la fissure correspondant à la distance entre l'ouverture et la pointe de la fissure est déterminée à l'aide d'une méthode non destructive, le procédé comprenant en outre la détermination (S9, S91) de la pointe (P) de la fissure en fonction de la direction et de la longueur de la fissure.

13. Procédé selon la revendication 10, dans lequel la fissure est une fissure noyée et dans lequel une pluralité d'instruments de mesure est installée, le procédé comprenant en outre la génération (S85) d'un histogramme des valeurs d'angle obtenues pour chaque couple de premier et deuxième points, la direction de la fissure étant déterminée (S86) en fonction dudit histogramme.

14. Procédé selon la revendication 13, dans lequel la direction de la fissure correspond à l'angle d'un maximum local de l'histogramme, ledit maximum local étant le plus éloigné de 0°.

15. Procédé selon la revendication 13 ou 14, comprenant en outre la détermination (S9) des positions respectives des pointes ($P_1$, $P_2$) de la fissure, ladite détermination comprenant:

   - tracer (S92) une courbe représentant, le long de la direction de la fissure, l'angle obtenu pour chaque couple de premier et deuxième points situés dans la direction de la fissure,
   les couples de premier et deuxième points situés dans la direction de la fissure désignant les couples de points pour lesquels l'angle obtenu est compris dans une plage de valeurs allant, sur l'histogramme, d'un plus grand minimum local inférieur à l'angle correspondant à la direction de la fissure à un plus petit minimum local supérieur audit angle correspondant à la direction de la fissure,
   - déterminer (S93), en fonction de l'angle correspondant à la direction de la fissure, un plateau de ladite courbe tracée, de sorte que les deux couples de premier et deuxième points marquant deux extrémités du plateau correspondent respectivement aux pointes de la fissure.

16. Procédé selon la revendication 12 ou 15, comprenant en outre, à l'aide de la direction, de la position de la ou des pointes de la fissure et du modèle de la mécanique élastique linéaire de la rupture, la prédiction de la propagation de la fissure afin d'en évaluer la nocivité.

17. Système (1) de détermination de caractéristiques d'une fissure (3) dans un matériau (5), la présence de ladite fissure étant préalablement détectée dans une zone de présence du matériau à l'aide d'une méthode non destructive, le système comprenant :

   - un module de diagnostic (7) du matériau agencé pour déterminer au moins deux chargements mécaniques initiaux ($F_1$, $F_2$) appliqués au matériau, chaque chargement mécanique étant défini par un champ vectoriel d'amplitude connue, chaque chargement mécanique initial étant responsable de la présence de ladite fissure ou ayant un impact sur ladite fissure,
   - un dispositif (9) d'application de chargements mécaniques agencé pour :

      appliquer plusieurs chargements mécaniques d'ouverture de la fissure au matériau, chaque chargement mécanique d'ouverture étant une combinaison linéaire desdits au moins deux chargements mécaniques initiaux,
appliquer plusieurs chargements mécaniques de fermeture de la fissure au matériau, chaque chargement mécanique de fermeture étant une combinaison linéaire desdits au moins deux chargements mécaniques initiaux,

- au moins un instrument de mesure (11) agencé pour mesurer un déplacement relatif d'un premier point par rapport à un deuxième point induit par chaque chargement d'ouverture et par chaque chargement de fermeture, lesdits premier et deuxième points étant situés dans la zone de présence de la fissure, chaque instrument de mesure étant associé à un couple d'un premier et d'un deuxième points, et
- une unité de traitement (13) agencée pour estimer, en fonction de l'amplitude de chaque chargement mécanique de fermeture et d'ouverture appliqué au matériau et des déplacements relatifs mesurés par le ou les instruments de mesure, la direction ($\alpha$) de la fissure.

**Patentansprüche**

1. Verfahren zur Bestimmung der Eigenschaften eines Risses (3) in einem Material (5), wobei das Vorhandensein des Risses zuvor in einem Bereich des Vorhandenseins des Materials mit Hilfe eines zerstörungsfreien Verfahrens festgestellt wird (S1), wobei das Verfahren umfasst:

- Bestimmen (S2) von wenigstens zwei anfänglichen mechanischen Belastungen ($F_1$, $F_2$), die auf das Material angewendet werden, wobei jede mechanische Belastung durch ein Vektorfeld mit bekannter Amplitude definiert ist und jede anfängliche mechanische Belastung für das Vorhandensein des Risses verantwortlich ist oder sich auf den Riss auswirkt,
- Ausüben (S4) mehrerer rissöffnender mechanischer Belastungen auf das Material, wobei jede mechanische Öffnungsbelastung eine Linearkombination der wenigstens zwei anfänglichen mechanischen Belastungen ist,
- Messen (S5), mit Hilfe wenigstens eines Messinstruments (11), einer relativen Verschiebung eines ersten Punkts in Bezug auf einen zweiten Punkt, die durch jede mechanische Öffnungsbelastung induziert wird, wobei der erste und der zweite Punkt in dem Bereich des Vorhandenseins des Risses liegen, wobei jedes Messinstrument einem Paar aus erstem und zweitem Punkt zugeordnet ist,
- Ausüben (S6) mehrerer mechanischer Belastungen zum Schließen des Risses auf das Material, wobei jede mechanische Schließbelastung eine Linearkombination der wenigstens zwei anfänglichen mechanischen Belastungen ist,
- Messen (S7), mit Hilfe jedes Messinstruments, der relativen Verschiebung des ersten Punkts in Bezug auf den zweiten Punkt, die durch jede mechanische Schließbelastung induziert wird, und
- Schätzen (S8), durch Computermittel, der Richtung ($\alpha$) des Risses, als Funktion der Amplitude jeder auf das Material ausgeübten mechanischen Schließ- und Öffnungsbelastung und der von dem oder den Messinstrumenten gemessenen relativen Verschiebungen.

2. Verfahren nach Anspruch 1, wobei wenigstens ein Messinstrument ein Extensometer ist.

3. Verfahren nach Anspruch 1 oder 2, wobei die auf das Material ausgeübten mechanischen Öffnungs- und Schließbelastungen von geringer Amplitude sind, also mechanische Belastungen, die sicherstellen, dass das Material ein elastisches und lineares mechanisches Verhalten beibehält.

4. Verfahren nach Anspruch 3, wobei die Gewichtungskoeffizienten ($\beta$, $\gamma$) der Linearkombination der wenigstens zwei anfänglichen mechanischen Belastungen reelle Zahlen zwischen -1 und 1 sind.

5. Verfahren nach Anspruch 3 oder 4, wobei die Messung der relativen Verschiebung eines ersten Punktes in Bezug auf einen zweiten Punkt die Messung der relativen Verschiebung des ersten Punktes in Bezug auf den zweiten Punkt in einer ersten Richtung und die Messung der relativen Verschiebung des ersten Punktes in Bezug auf den zweiten Punkt in einer zweiten Richtung orthogonal zur ersten Richtung umfasst.

6. Verfahren nach Anspruch 5, ferner umfassend das Bestimmen (S81), für jedes Paar aus erstem und zweitem Punkt, einer Öffnungsfläche (SO), die die Größe der auf das Material ausgeübten mechanischen Öffnungsbelastung als Funktion der relativen Verschiebung des ersten Punkts in Bezug auf den zweiten Punkt in der ersten Richtung und der relativen Verschiebung des ersten Punkts in Bezug auf den zweiten Punkt in der zweiten Richtung in einem Koordinatensystem (O,x,y,z) repräsentiert, wobei x die Verschiebung in der ersten Richtung bezeichnet, y die Verschiebung in der zweiten Richtung bezeichnet und z die Amplitude der auf das Material ausgeübten mechanischen Öffnungsbelastung bezeichnet.

7.  Verfahren nach Anspruch 6, wobei die Öffnungsfläche einem Rotationskegel ähnelt, der entlang einer Ebene (PL) abgeschnitten ist, die orthogonal zur Basis des Kegels verläuft und die Spitze des Kegels einschließt.

8.  Verfahren nach einem der Ansprüche 5 bis 7, ferner umfassend das Bestimmen (S82), für jedes Paar aus erstem und zweitem Punkt, einer Schließfläche (SF), die die Größe der auf das Material ausgeübten mechanischen Schließbelastung als Funktion der relativen Verschiebung des ersten Punkts in Bezug auf den zweiten Punkt entlang der ersten Richtung und der relativen Verschiebung des ersten Punkts in Bezug auf den zweiten Punkt entlang der zweiten Richtung in einem Koordinatensystem (O,x,y,z) repräsentiert, wobei x die Verschiebung in der ersten Richtung bezeichnet, y die Verschiebung in der zweiten Richtung bezeichnet und z die Amplitude der auf das Material ausgeübten mechanischen Schließbelastung bezeichnet.

9.  Verfahren nach Anspruch 8, wobei die Schließfläche einer Ebene ähnelt.

10. Verfahren nach Anspruch 7 und 9 in Kombination, wobei das Schätzen der Richtung des Risses umfasst:

    - Bestimmen (S83) der Schnittgeraden (D) der Abschneideebene des Rotationskegels, die der Öffnungsfläche entspricht, und der Ebene, die der Schließfläche entspricht,
    - Bestimmen der orthogonalen Projektion der Schnittgeraden auf die Ebene (Oxy) und eines Winkels ($\alpha_i$), der die Richtung der erhaltenen projizierten Geraden (D') charakterisiert, wobei der Winkel ($\alpha_i$) dem Winkel entspricht, der durch die erhaltene projizierte Gerade (D') und durch die der relativen Verschiebung entlang der x-Achse entsprechenden Achse oder durch die der relativen Verschiebung entlang der $\gamma$-Achse entsprechenden Achse gebildet wird.

11. Verfahren nach Anspruch 10, wobei der Riss ein Durchgangsriss mit einer Öffnung an der Grenze zwischen dem Inneren und dem Äußeren des Materials ist und wobei ein einziges Messinstrument installiert wird, um die relative Verschiebung eines ersten Punktes in Bezug auf einen zweiten Punkt zu messen, wobei sich der erste und der zweite Punkt auf beiden Seiten des Risses an der Öffnung befinden und der Winkel, der die Richtung der erhaltenen projizierten Geraden charakterisiert, der Richtung des Risses entspricht.

12. Verfahren nach Anspruch 11, wobei die Länge des Risses, die dem Abstand zwischen der Öffnung und der Spitze des Risses entspricht, mit Hilfe eines zerstörungsfreien Verfahrens bestimmt wird, wobei das Verfahren ferner die Bestimmung (S9, S91) der Spitze (P) des Risses in Abhängigkeit von der Richtung und der Länge des Risses umfasst.

13. Verfahren nach Anspruch 10, wobei der Riss ein versenkter Riss ist und wobei eine Vielzahl von Messinstrumenten installiert wird, wobei das Verfahren ferner das Erzeugen (S85) eines Histogramms der Winkelwerte umfasst, die für jedes Paar aus erstem und zweitem Punkt erhalten werden, wobei die Richtung des Risses in Abhängigkeit von dem Histogramm bestimmt wird (S86).

14. Verfahren nach Anspruch 13, wobei die Richtung des Risses dem Winkel eines lokalen Maximums des Histogramms entspricht, wobei das lokale Maximum am weitesten von 0° entfernt ist.

15. Verfahren nach Anspruch 13 oder 14, ferner umfassend das Bestimmen (S9) der jeweiligen Positionen der Spitzen ($P_1$, $P_2$) des Risses, wobei das Bestimmen umfasst:

    - Zeichnen (S92) einer Kurve, die entlang der Richtung des Risses den Winkel darstellt, der für jedes Paar aus erstem und zweitem Punkt in der Richtung des Risses erhalten wird,
    wobei die Paare aus erstem und zweitem Punkt in der Richtung des Risses die Paare von Punkten bezeichnen, für die der erhaltene Winkel in einem Wertebereich liegt, der auf dem Histogramm von einem größten lokalen Minimum, das kleiner ist als der Winkel, der der Richtung des Risses entspricht, bis zu einem kleinsten lokalen Minimum, das größer ist als der Winkel, der der Richtung des Risses entspricht, reicht,
    - Bestimmen (S93), als eine Funktion des Winkels, der der Richtung des Risses entspricht, eines Plateaus der aufgezeichneten Kurve, so dass die beiden Paare aus erstem und zweitem Punkt, die die beiden Enden des Plateaus markieren, jeweils den Spitzen des Risses entsprechen.

16. Verfahren nach Anspruch 12 oder 15, welches ferner unter Verwendung der Richtung, der Position der Spitze(n) des Risses und des Modells der linearen elastischen Bruchmechanik die Vorhersage der Ausbreitung des Risses umfasst, um dessen Schädlichkeit zu bewerten.

17. System (1) zur Bestimmung der Eigenschaften eines Risses (3) in einem Material (5), wobei das Vorhandensein des Risses zuvor in einem Bereich des Vorhandenseins des Materials mit Hilfe eines zerstörungsfreien Verfahrens festgestellt wird, wobei das System umfasst:

- ein Diagnosemodul (7) für das Material, welches dazu angeordnet ist, wenigstens zwei mechanische Anfangsbelastungen ($F_1$, $F_2$) zu bestimmen, die auf das Material angewendet werden, wobei jede mechanische Belastung durch ein Vektorfeld mit bekannter Amplitude definiert ist, wobei jede mechanische Anfangsbelastung für das Vorhandensein des Risses verantwortlich ist oder sich auf den Riss auswirkt,
- eine Vorrichtung (9) zum Aufbringen von mechanischen Belastungen, die dazu angeordnet ist:

  mehrere rissöffnende mechanische Belastungen auf das Material anzuwenden, wobei jede rissöffnende mechanische Belastung eine Linearkombination der wenigstens zwei anfänglichen mechanischen Belastungen ist,
  mehrere mechanische Belastungen zum Schließen des Risses auf das Material anzuwenden, wobei jede mechanische Belastung zum Schließen eine Linearkombination der wenigstens zwei anfänglichen mechanischen Belastungen ist,

- wenigstens ein Messinstrument (11), welches dazu angeordnet ist, eine relative Verschiebung eines ersten Punkts in Bezug auf einen zweiten Punkt zu messen, die durch jede Öffnungsbelastung und durch jede Schließbelastung induziert wird, wobei der erste und der zweite Punkt in dem Bereich des Vorhandenseins des Risses liegen und jedes Messinstrument einem Paar aus erstem und zweitem Punkt zugeordnet ist, und
- eine Verarbeitungseinheit (13), die dazu angeordnet ist, in Abhängigkeit von der Amplitude jeder auf das Material aufgebrachten mechanischen Schließ- und Öffnungsbelastung und der von dem oder den Messinstrumenten gemessenen relativen Verschiebungen die Richtung ($\alpha$) des Risses zu schätzen.

## Claims

1. A method for determining characteristics of a crack (3) in a material (5), the presence of the crack being detected beforehand (S1) in an area of presence of the material by using a non-destructive process, the method comprising:

   - determining (S2) at least two initial mechanical loads ($F_1$, $F_2$) applied to the material, each mechanical load being defined by a vector field of known amplitude, each initial mechanical load ($F_1$, $F_2$) being responsible for the presence of the crack or having an impact on said crack,
   - applying (S4) a plurality of crack-opening mechanical loads to the material, each opening mechanical load being a linear combination of the at least two initial mechanical loads,
   - measuring (S5), using at least one measuring instrument (11), a relative displacement of a first point with respect to a second point induced by each opening mechanical load, the first and second points being located in the area of presence of the crack, each measuring instrument being associated with a pair of first and second points,
   - applying (S6) a plurality of crack-closing mechanical loads to the material, each closing mechanical load being a linear combination of the at least two initial mechanical loads,
   - measuring (S7), using each measuring instrument, the relative displacement of the first point with respect to the second point induced by each closing mechanical load, and
   - estimating (S8) the direction ($\alpha$) of the crack, by computer means, as a function of the amplitude of each opening and closing mechanical load applied to the material and of the relative displacements measured by the measuring instrument(s).

2. The method of claim 1, wherein at least one measuring instrument is an extensometer.

3. The method of one of claims 1 and 2, wherein the opening and closing mechanical loads applied to the material are of small amplitude, thus mechanical loads ensuring the material to keep an elastic and linear mechanism behavior.

4. The method of claim 3, wherein weighting coefficients ($\beta$, $\gamma$) for the linear combination of the at least two initial mechanical loads are real numbers between -1 and 1.

5. The method of one of claims 3 and 4, wherein the measurement of the relative displacement of a first point with respect to a second point comprises measuring the relative displacement of the first point with respect to the second point in a first direction and measuring the relative displacement of the first point relative to the second point in a second direction orthogonal to the first direction.

6. The method of claim 5, further comprising the determination (S81), for each pair of first and second points, of an opening surface (SO) representing the amplitude of the opening mechanical load applied to the material as a function of the relative displacement of the first point with respect to the second point in the first direction and of the relative displacement of the first point with respect to the second point in the second direction in a coordinate system (O,x,y,z), where x is the displacement in the first direction, y is the displacement in the second direction, and z is the amplitude of the opening mechanical load applied to the material.

7. The method of claim 6, wherein the opening surface is similar to a cone of revolution truncated along a plane (PL) orthogonal to the base of the cone and comprising the vertex of the cone.

8. The method of one of claims 5 to 7, further comprising the determination (S82), for each pair of first and second points, of a closing surface (SF) representing the amplitude of the closing mechanical load applied to the material as a function of the relative displacement of the first point with respect to the second point in the first direction and of the relative displacement of the first point with respect to the second point in the second direction in a coordinate system (O,x,y,z), where x is the displacement in the first direction, y is the displacement in the second direction, and z is the amplitude of the opening mechanical load applied to the material.

9. The method of claim 8, wherein the closing surface is similar to a plane.

10. The method of claims 7 and 9 taken in combination,
    wherein the estimation of the direction of the crack comprises:

    - determining (S83) the line (D) of intersection of the truncation plane of the cone of revolution corresponding to the opening surface and the plane corresponding to the closing surface,
    - determining the orthogonal projection of the line of intersection on plane (Oxy) and an angle ($\alpha_i$) characterizing the direction of the projected line (D') obtained, said angle ($\alpha_i$) corresponding to the angle formed by the projected line (D') obtained and by the axis corresponding to the relative displacement along the axis x or the axis corresponding to the relative displacement along axis y.

11. The method of claim 10, wherein the crack is a surface crack having an opening at a boundary between an interior and an exterior of the material and wherein a single measuring instrument is installed to measure the relative displacement of a first point with respect to a second point, the first and second points being located one on each side of the crack at the level of the opening, the angle characterizing the direction of the projected line corresponding to the direction of the crack.

12. The method of claim 11, wherein the length of the crack corresponding to the distance between the opening and the tip of the crack is determined using a non-destructive process, the method further comprising the determination (S9, S91) of the tip (P) of the crack as a function of the direction and length of the crack.

13. The method of claim 10, wherein the crack is an embedded crack and wherein a plurality of measuring instruments is installed, the method further comprising the generation (S85) of a histogram of angle values obtained for each pair of first and second points, the direction of the crack being determined (S86) on the basis of the histogram.

14. The method of claim 13, wherein the direction of the crack corresponds to the angle of a local maximum of the histogram, the local maximum being the furthest from 0°.

15. The method of one of claims 13 and 14, further comprising the determination (S9) of the respective positions of the tips ($P_1$, $P_2$) of the crack, the determination comprising:

    - plotting (S92) a curve representing, along the direction of the crack, the angle obtained for each pair of first and second points located one on each side of the crack,

- determining (S93), based on the angle corresponding to the direction of the crack, a plateau in the plotted curve, such that the two pairs of first and second points marking two ends of the plateau respectively correspond to the tips of the crack.

16. The method of one of claims 12 and 15, further comprising the prediction of the propagation of the crack, using the direction, the position of the tip or tips of the crack, and the model of linear elastic fracture mechanics, in order to evaluate its harmfulness.

17. A system (1) for determining characteristics of a crack (3) in a material (5), the presence of the crack having been detected beforehand in an area of presence of the material by means of a non-destructive process, the system comprising:

- a diagnostic module (7) for the material, arranged to determine at least two initial mechanical loads ($F_1$, $F_2$) applied to the material, each mechanical load being defined by a vector field of known amplitude, each initial mechanical load ($F_1$, $F_2$) being responsible for the presence of the crack or having an impact on said crack,
- a device (9) for applying mechanical loads, arranged for:

applying a plurality of crack-opening mechanical loads to the material, each opening mechanical load being a linear combination of the at least two initial mechanical loads,
applying a plurality of crack-closing mechanical loads to the material, each closing mechanical load being a linear combination of the at least two initial mechanical loads,

- at least one measuring instrument (11) arranged to measure a relative displacement of a first point with respect to a second point induced by each opening load and by each closing load, the first and second points being located in the area of presence of the crack, each measuring instrument being associated with a pair of first and second points, and
- a processing unit (13) arranged to estimate the direction ($\alpha$) of the crack as a function of the amplitude of each opening and closing mechanical load applied to the material and of the relative displacements measured by the measuring instrument(s).

**FIG. 1**

EP 3 660 484 B1

FIG. 2A

FIG. 2B

FIG. 3

FIG. 4

FIG. 5

FIG. 6

FIG. 7

FIG. 8

**EP 3 660 484 B1**

## RÉFÉRENCES CITÉES DANS LA DESCRIPTION

**Documents brevets cités dans la description**

- JP 2002349178 A